# EUROPEAN PATENT SPECIFICATION

(11) **EP 3 780 676 B1**
(45) Date of publication and mention of the grant of the patent: **01.01.2025**
(21) Application number: 18918448.4
(22) Date of filing: 14.05.2018
(51) Int. Cl.: H04W 4/60, H04M 1/72403, H04W 8/18

(54) **METHOD FOR AUTOMATICALLY SWITCHING SIM CARDS, AND ELECTRONIC APPARATUS**
VERFAHREN ZUM AUTOMATISCHEN WECHSELN VON SIM-KARTEN UND ELEKTRONISCHES GERÄT
PROCÉDÉ DE COMMUTATION AUTOMATIQUE DE CARTES SIM ET APPAREIL ÉLECTRONIQUE

(43) Date of publication of application: 17.02.2021
(73) Proprietor: HUAWEI TECHNOLOGIES CO., LTD., Shenzhen, Guangdong 518129 (CN)
(72) Inventor: WANG, Zezhi, Shenzhen, Guangdong 518129 (CN); LI, Tao, Shenzhen, Guangdong 518129 (CN)
(74) Representative: Pfenning, Meinig & Partner mbB
(86) International application number: PCT/CN2018/086762
(87) International publication number: WO 2019/218124

(56) References cited:
- WO-A1-2018/049859
- CN-A- 103 118 349
- CN-A- 105 450 828
- CN-A- 106 376 043
- CN-A- 107 027 114
- CN-A- 107 172 287
- CN-A- 107 948 949
- CN-A- 107 979 693

## Description

### TECHNICAL FIELD

This application relates to the field of terminal technologies, and in particular, to a method for automatically switching SIM cards and an electronic apparatus.

### BACKGROUND

Currently, an increasing quantity of mobile operators cooperate with internet providers to provide targeted data cards (for example, a Tencent King card and a Youku Ku card), to provide users with more preferential packages. For example, in a package of the Tencent King card, mobile data generated by applications such as WeChat, QQ, Tencent Video, QQ Music, and Tencent Game that are developed or represented by Tencent is free of charge. In a package of the Youku Ku card, mobile data generated by Youku Video is free of charge.

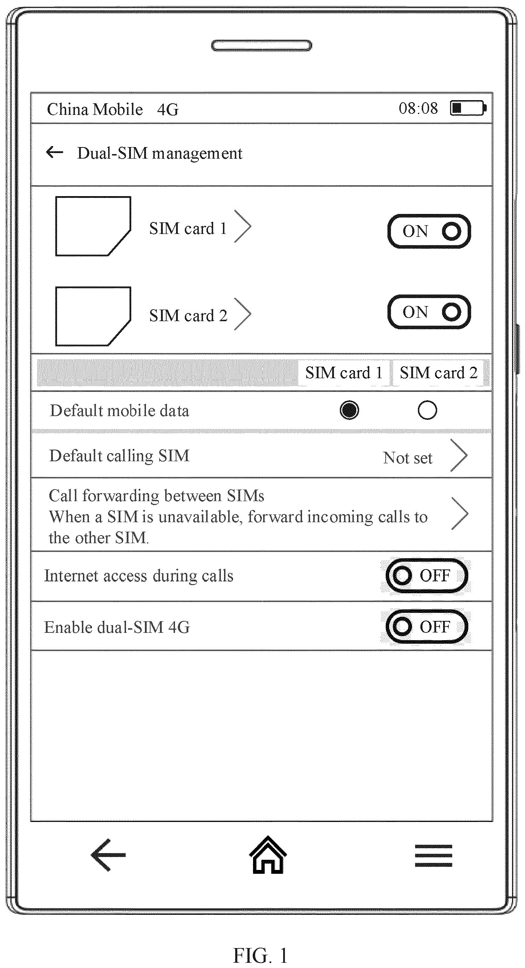

However, in the prior art, it is assumed that a subscriber identity module (subscriber identity module, SIM) card 1 and a SIM card 2 are installed on a mobile phone having a dual-SIM dual-standby function, and the SIM card 1 is a Tencent King card and the SIM card 2 is a Youku Ku card. When a user needs to use Tencent Video or Tencent Game, the user needs to manually set default mobile data to the SIM card 1 on a settings screen of dual-SIM management shown in FIG. 1 before enabling Tencent Video or Tencent Game, so that mobile data generated by running Tencent Video or Tencent Game on the mobile phone is free of charge. When the user needs to use Youku Video, the user needs to manually set the default mobile data to the SIM card 2 on the settings screen of dual-SIM management shown in FIG. 1 before enabling Youku Video, so that mobile data generated by running Youku Video on the mobile phone is free of charge. Therefore, the prior-art manner of manually switching SIM cards is very troublesome, has relatively low interaction performance, and reduces user experience.

WO 2018/049859 A1 describes a method for controlling usage of a data allowance. The method comprises: classifying applications in a terminal, and determining data allowance information of respective SIM cards in the terminal; and performing matching on the data allowance information of the respective SIM cards and the classified applications to assign one of the SIM cards to a corresponding one of the classified applications, such that usage of a data allowance of the SIM card assigned to each of the classified applications is controlled. CN 106 376 043 A relates to an automatic switching method and device for a SIM card. CN 107 979 693 A concerns an information processing method applied to a terminal. The terminal comprises at least two communication cards. CN 107 172 287 A provides a multi-card communication method and a mobile terminal.
CN 107 027 114 A also provides a SIM card switching method and device.

### SUMMARY

This application provides a method for automatically switching SIM cards, an electronic apparatus, a computer storage medium storing a program and a computer program product according to the independent claims, so as to help simplify a manner of an operation performed by a user on an electronic device to some extent, and improve user experience.

According to a first aspect, an embodiment of this application provides a method for automatically
switching subscriber identity module SIM cards, applied to an electronic device, as defined in claim1. A first application and a second application are installed on the electronic device, and a first SIM card and a second SIM card are preconfigured in the electronic device. The method includes: The electronic device automatically determines that a correspondence between an application and a SIM card is that the first application corresponds to the first SIM card and the second application corresponds to the second SIM card. When performing a data service by using the first SIM card, if detecting an operation of enabling the second application by a user, the electronic device switches to the second SIM card to perform a data service. The first SIM card is used to perform a data service for the first application, and the second SIM card is used to perform a data service for the second application. A data service package of the first SIM card is different from a data service package of the second SIM card. When detecting that a first virtual button on a settings screen of SIM card management is on, the electronic device automatically determines that the correspondence between an application and a SIM card is that the first application corresponds to the first SIM card and the second application corresponds to the second SIM card. The first virtual button is used to enable or disable a function of automatically matching an application and a SIM card. The foregoing technical solution helps the user better control the electronic device.

The electronic device stores the correspondence between an application and a SIM card and displays the correspondence between an application and a SIM card on the settings screen of SIM card management. This technical solution helps the user to learn of the automatically matched correspondence between an application and a SIM card. When detecting that the first SIM card and/or the second SIM card are/is replaced, the electronic device updates the correspondence between an application and a SIM card; or when detecting that the first SIM card and/or the second SIM card are/is detached, the electronic device updates the correspondence between an application and a SIM card; or when detecting that a new application is installed, the electronic device updates the correspondence between an application and a SIM card; or when detecting that the first application and/or the second application are/is uninstalled, the electronic device updates the correspondence between an application and a SIM card. This technical solution helps to improve reliability of the correspondence between an application and a SIM card.

In this embodiment of this application, the electronic device can automatically determine the correspondence between an application and a SIM card. Therefore, when the user enables an application, the electronic device can switch to a SIM card corresponding to the application to perform a data service, and the user does not need to manually match the correspondence between an application and a SIM card. In this way, operations performed by the user on the electronic device are reduced, improvement of intelligent interaction between the electronic device and the user is facilitated, and user experience is improved to some extent.

It should be understood that the first SIM card and the second SIM card in this embodiment of this application may be physical SIM cards, or may be virtual cards (for example, eSIM cards). This is not limited.

In a possible design, the electronic device automatically determines, based on a package name of the first application, a package name of the second application, data service package information of the first SIM card, and data service package information of the second SIM card, that the correspondence between an application and a SIM card is that the first application corresponds to the first SIM card and the second application corresponds to the second SIM card. A keyword included in the package name of the first application is the same as a keyword included in the data service package information of the first SIM card, and a keyword included in the package name of the second application is the same as a keyword included in the data service package information of the second SIM card. The foregoing technical solution helps simplify an implementation of automatically determining the correspondence between an application and a SIM card.

To simplify an implementation and reduce complexity of an implementation solution, the electronic device may obtain data service package information of a SIM card in the following manner. In a possible design, the electronic device obtains the data service package information of the first SIM card from a business and operation support system BOSS of an operator to which the first SIM card belongs, and obtains the data service package information of the second SIM card from a BOSS of an operator to which the second SIM card belongs. In another possible design, the electronic device obtains the data service package information of the first SIM card from an application of an operator to which the first SIM card belongs, and obtains the data service package information of the second SIM card from an application of an operator to which the second SIM card belongs.

(deleted)

(deleted)

In a possible design, the electronic device displays prompt information on a screen of the second application within preset duration. The prompt information is used to prompt the user that a SIM card used when the electronic device performs a data service is the second SIM card. The foregoing technical solution helps the user to learn of a specific SIM card that is currently used by the electronic device to perform a data service.

(deleted)

(deleted)

In a possible design, when the electronic device performs a data service by using the first SIM card and the first application is being run, after the electronic device switches to the second SIM card to perform a data service,
the electronic device disables the first application. The foregoing technical solution helps reduce overheads of the user.

In a possible design, when the electronic device performs a data service by using the first SIM card and the first application is being run, after the electronic device switches to the second SIM card to perform a data service, the electronic device interrupts a data service of the first application, and continues the data service of the first application after switching to the first SIM card to perform a data service. The foregoing technical solution helps reduce overheads of the user and improve intelligent interaction between the electronic device and the user.

In a possible design, when the electronic device performs a data service by using the first SIM card and the first application is being run, after the electronic device switches to the second SIM card to perform a data service, the electronic device continues to run the first application in the background. The foregoing technical solution helps prevent the user from missing an important notification. For example, the first application is an instant application such as WeChat.

In a possible design, the electronic device determines, based on settings of a second virtual button, whether to continue to run the first application in the background. The settings of the second virtual button are used to enable or disable a function of continuing to run the first application in the background when a SIM card used after switching is not the first SIM card. The foregoing technical solution helps the user better control the electronic device.

In a possible design, the first SIM card is set as a default SIM card, and the default SIM card is a SIM card used by the electronic device by default to perform a data service. The foregoing technical solution helps reduce complexity of solution implementation.

In a possible design, after detecting that the second application is disabled, the electronic device switches to the first SIM card to perform a data service; or after detecting that the second application exits the foreground, the electronic device switches to the first SIM card to perform a data service. According to the foregoing technical solution, the electronic device can run on a default SIM card when an application corresponding to the second SIM card is disabled or is not run in the foreground.

In a possible design, if a third application is further installed on the electronic device, and the third application corresponds to neither the first SIM card nor the second SIM card, if detecting an operation of enabling the third application by the user, the electronic device performs a data service by using the default SIM card. The foregoing technical solution helps ensure smooth running of the electronic device and reduce a possibility of an error.

According to a second aspect, an embodiment of this application provides an electronic apparatus, as further defined in claim 9.

According to a third aspect, an embodiment of this application provides a computer storage medium, as defined in claim 10. The computer storage medium stores a program. When the program is run on an electronic device, the electronic device is enabled to perform the method in the first aspect or any possible design of the first aspect.

According to a fourth aspect, an embodiment of this application provides a computer program product, as defined in claim 11. When the computer program product is run on an electronic device, the electronic device is enabled to perform the method in the first aspect or any possible design of the first aspect.

In addition, for technical effects brought by any possible design manner of the second aspect to the fourth aspect, refer to technical effects brought by a corresponding design manner of the first aspect. Details are not described herein again.

### BRIEF DESCRIPTION OF DRAWINGS

FIG. 1 is a schematic diagram of a settings screen of dual-SIM management;
FIG. 2 is a schematic structural diagram of a mobile phone according to an embodiment of this application;
FIG. 3 is a possible schematic diagram of a settings screen of dual-SIM management according to an embodiment of this application;
FIG. 4A and FIG. 4B are another possible schematic diagram of a settings screen of dual-SIM management according to an embodiment of this application;
FIG. 5 is still another possible schematic diagram of a settings screen of dual-SIM management according to an embodiment of this application;
FIG. 6 is yet another possible schematic diagram of a settings screen of dual-SIM management according to an embodiment of this application;
FIG. 7 is a schematic diagram of a user interface of Youku Video according to an embodiment of this application;
FIG. 8 is still yet another possible schematic diagram of a settings screen of dual-SIM management according to an embodiment of this application;
FIG. 9A and FIG. 9B are still yet another possible schematic diagram of a settings screen of dual-SIM management according to an embodiment of this application;
FIG. 10 is a possible schematic flowchart of obtaining data service package information of a SIM card according to an embodiment of this application;
FIG. 11A and FIG. 11B are a possible schematic diagram of a screen of a cellular mobile network according to an embodiment of this application;
FIG. 12 is another possible schematic flowchart of obtaining data service package information of a SIM card according to an embodiment of this application;
FIG. 13 is still yet another possible schematic diagram of a settings screen of dual-SIM management according to an embodiment of this application;
FIG. 14 is a possible schematic diagram of a screen of data management according to an embodiment of this application;
FIG. 15 is a schematic diagram of a scenario to which an embodiment of this application is applied;
FIG. 16 is a possible schematic structural diagram of an electronic apparatus according to an embodiment of this application; and
FIG. 17 is another possible schematic structural diagram of an electronic apparatus according to an embodiment of this application.

### DESCRIPTION OF EMBODIMENTS

The embodiments disclosed in this application may be applied to an electronic device on which two or more SIM cards can be configured, for example, a dual-SIM dual-standby mobile phone. In the embodiments of this application, the SIM card configured on the electronic device may be a physical SIM (subscriber identification module, subscriber identity module) card inserted into a card slot of the electronic device, or may be a virtual card (for example, an embedded-SIM (embedded-SIM, eSIM) card). This is not limited. It may be understood that the SIM card may also be referred to as a universal integrated circuit card (universal integrated circuit card, UICC). Generally, a terminal such as a mobile phone can be normally used for communication functions such as a call and an SMS message only after a SIM card is installed. A size of a SIM card gradually decreases in an evolution process from a mini-SIM card, a micro-SIM card, to a nano-SIM card, and needs to occupy internal space of the mobile phone. The eSIM card may also be referred to as an embedded-universal integrated circuit card (embedded-UICC, eUICC). A volume of the eSIM card is about 90% smaller than that of a conventional SIM card, and the eSIM card may be directly welded to a mainboard of the mobile phone, instead of being inserted into the mobile phone as an independent removable component. In addition, the eSIM card can be programmed, and can write or erase configuration information (that is, a profile such as a user identity and operator subscription information) of any operator, so that a user can subscribe to and change, online, different services provided by different operators.

It should be understood that, in some embodiments of this application, the electronic device may be a portable electronic device including a function such as a personal digital assistant and/or a music player, for example, a mobile phone, a tablet computer, or a wearable device (for example, a smartwatch) with a wireless communication function. An example embodiment of the portable electronic device includes but is not limited to a portable electronic device using iOS^{®}, Android^{®}, Microsoft^{®}, or another operating system. The portable electronic device may alternatively be another portable electronic device, for example, a laptop computer (laptop) computer with a touch-sensitive surface (for example, a touch panel). It should be further understood that, in some other embodiments of this application, the electronic device may alternatively not be a portable electronic device, but a desktop computer with a touch-sensitive surface (for example, a touch panel).

Generally, the electronic device supports a plurality of applications, for example, one or more of the following applications: a drawing application, a presentation application, a word processing application, a game application, a telephony application, a video player application, a music player application, an email application, an instant message receiving and sending application, a photo management application, a camera application, a browser application, a calendar application, a clock application, a payment application, and a health management application.

An example in which the electronic device is a dual-SIM dual-standby mobile phone with a touchscreen is used below for specific description.

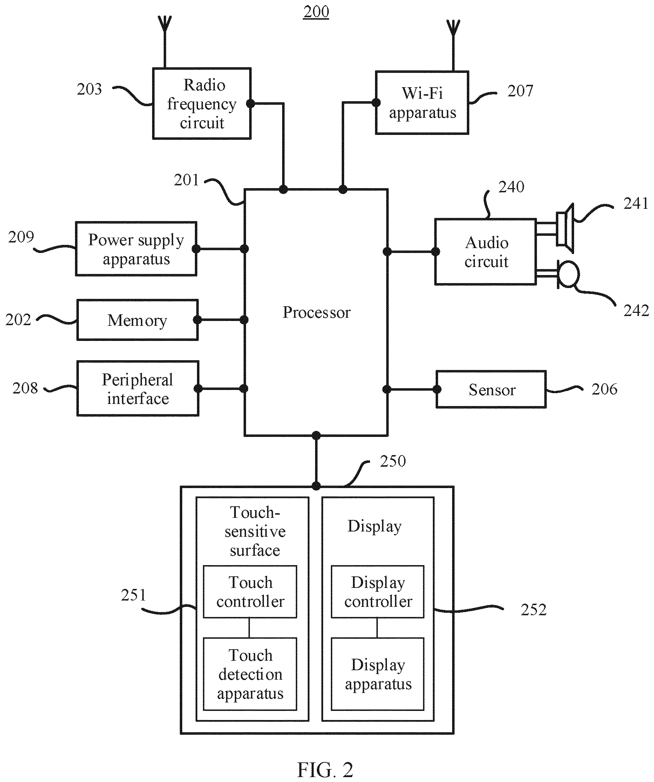

For example, FIG. 2 is a possible schematic structural diagram of a dual-SIM dual-standby mobile phone with a touchscreen. It should be understood that the mobile phone 200 shown in the figure is merely an example of the electronic device, and the mobile phone 200 may have more or fewer components than those shown in the figure, may combine two or more components, or may have different component arrangements. Various components shown in the figure may be implemented in hardware that includes one or more signal processors and/or application-specific integrated circuits, software, or a combination of hardware and software.

The mobile phone 200 may include one or more processors 201, a memory 202, a radio frequency (radio frequency, RF) circuit 203, an audio circuit 240, a speaker 241, a microphone 242, a touchscreen 250, one or more sensors 206, a wireless fidelity (wireless fidelity, Wi-Fi) apparatus 207, a peripheral interface 208, and a power supply apparatus 209. These components may communicate with each other by using one or more communications buses or signal cables (not shown in FIG. 2). A person skilled in the art may understand that the hardware structure shown in FIG. 2 does not constitute a limitation on the mobile phone 200, and the mobile phone 200 may include more or fewer components than those shown in the figure, may combine some components, or may have different component arrangements.

The following specifically describes the components of the mobile phone 200.

The processor 201 is a control center of the mobile phone 200. The processor 201 is connected to various parts of the mobile phone 200 by using various interfaces and cables, and performs various functions of the mobile phone 200 and processes data by running or executing an application (application, APP for short) stored in the memory 202, and by invoking data and an instruction that are stored in the memory 202. For example, the processor 201 may automatically match a correspondence between an application and a SIM card, and then after detecting an operation of enabling an application A by a user, determine, based on the correspondence between an application and a SIM card, to switch current mobile data to a SIM card corresponding to the application A, so that a tariff of mobile data generated when the application A is run on the mobile phone 200 is deducted from the SIM card corresponding to the application A.

In some embodiments, the processor 201 may include one or more processing units. The processor 201 may further integrate an application processor and a modem processor. The application processor mainly processes an operating system, a user interface, an application, and the like. The modem processor mainly processes wireless communication. It may be understood that the modem processor may alternatively not be integrated into the processor 201. For example, the processor 201 may be a chip Kirin 970 manufactured by Huawei. In some other embodiments of this application, the processor 201 may further include a fingerprint verification chip, configured to verify a collected fingerprint.

The memory 202 is configured to store an application and data. The processor 202 mainly includes a program storage area and a data storage area. The program storage area may store an operating system, and an application required by at least one function (for example, a sound playback function or an image playback function). The data storage area may store data (for example, audio data or a phone book) created when the mobile phone 200 is used. For example, the data storage area may store data generated when the mobile phone 200 runs the application in this embodiment of this application, for example, a SIM card package, a keyword in the SIM card package, or a correspondence between an application and a SIM card. It should be noted that the SIM card package, the keyword in the SIM card package, the correspondence between an application and a SIM card, or the like in this embodiment of this application may be further stored in the cloud. The mobile phone 200 obtains the SIM card package, the keyword in the SIM card, the correspondence between an application and a SIM card, or the like from the cloud. In addition, the memory 202 may include a high-speed random access memory, and may further include a non-volatile memory such as a magnetic disk storage device, a flash memory, or another volatile solid-state storage device. The memory 202 may store various operating systems such as an iOS^{®} operating system developed by Apple and an Android^{®} operating system developed by Google.

The RF circuit 203 may be configured to receive and send a radio signal in an information receiving and sending process or a conversation process. Specifically, after receiving downlink data from a base station, the RF circuit 203 may send the downlink data to the processor 201 for processing, and sends related uplink data to the base station. The RF circuit 203 usually includes but is not limited to an antenna, at least one amplifier, a transceiver, a coupler, a low noise amplifier, a duplexer, and the like. In addition, the RF circuit 203 may further communicate with another device through wireless communication. Any communications standard or protocol may be used for the wireless communication, and includes but is not limited to a global system for mobile communications, a general packet radio service, code division multiple access, wideband code division multiple access, long term evolution, an email, an SMS messaging service, and the like.

The audio circuit 240, the speaker 241, and the microphone 242 may provide an audio interface between the user and the mobile phone 200. The audio circuit 240 may convert received audio data into an electrical signal and transmit the electrical signal to the speaker 241, and the speaker 241 converts the electrical signal into a sound signal for output. In addition, the microphone 242 converts a collected sound signal into an electrical signal, and the audio circuit 240 receives the electrical signal, converts the electrical signal into audio data, and outputs the audio data to the RF circuit 203, to send the audio data to, for example, another mobile phone, or outputs the audio data to the memory 202 for further processing.

The touchscreen 250 may include a touch-sensitive surface 251 and a display 252. The touch-sensitive surface 251 (for example, a touch panel) may collect a touch event performed by the user on or near the mobile phone 200 (for example, an operation performed by the user on the touch-sensitive surface 251 or near the touch-sensitive surface 251 by using any proper object such as a finger or a stylus), and send collected touch information to another device such as the processor 201. The touch event performed by the user near the touch-sensitive surface 251 may be referred to as floating touch control. The floating touch control may mean that the user does not need to directly touch the touch panel to select, move, or drag a target (for example, an App icon), and the user only needs to be located near an electronic device to implement a desired function. In an application scenario of the floating touch control, terms such as "touch" and "contact" do not implicitly refer to directly touching the touchscreen 250, but refer to being near or close to the touchscreen 250. The touch-sensitive surface 251 on which the floating touch control can be performed may be implemented in a capacitive manner, an infrared light sensing manner, an ultrasonic wave manner, or the like.

The touch-sensitive surface 251 may include two parts: a touch detection apparatus and a touch controller. The touch detection apparatus detects a touch orientation of the user, detects a signal generated by a touch operation, and transmits the signal to the touch controller. The touch controller receives touch information from the touch detection apparatus, converts the touch information into touch point coordinates, and sends the touch point coordinates to the processor 201. The touch controller may further receive an instruction sent by the processor 201, and execute the instruction. In addition, the touch-sensitive surface 251 may be implemented in a plurality of manners such as a resistive manner, a capacitive manner, an infrared manner, or a surface acoustic wave manner.

The display (also referred to as a display) 252 may be configured to display information entered by the user or information provided for the user, and various menus of the mobile phone 200. The display 252 may include two parts: a display controller and a display apparatus. The display controller is configured to receive a signal or data sent by the processor 201, to drive to display a corresponding screen on the display apparatus. For example, in this embodiment of this application, the display apparatus may be configured by using an LCD (liquid crystal display, a liquid crystal display) or an organic light-emitting diode (organic light-emitting diode, OLED). For example, the display apparatus is configured by using an active matrix organic light-emitting diode (active matrix organic light emitting diode, AMOLED).

It should be understood that the touch-sensitive surface 251 may cover the display 252. After detecting a touch event on or near the touch-sensitive surface 251, the touch-sensitive surface 251 transmits the touch event to the processor 201, to determine a type of the touch event. Then, the processor 201 may provide a corresponding visual output on the display 252 based on the type of the touch event. Although the touch-sensitive surface 251 and the display 252 are used as two independent components to implement input and output functions of the mobile phone 200 in FIG. 2, the touch-sensitive surface 251 and the display 252 may be integrated to implement the input and output functions of the mobile phone 200 in some embodiments. It may be understood that the touchscreen 250 is formed by stacking a plurality of layers of materials. In this embodiment of this application, only the touch-sensitive surface (layer) and the display (layer) are displayed, and another layer is not recorded. In addition, in some other embodiments of this application, the touch-sensitive surface 251 may cover the display 252, and a size of the touch-sensitive surface 251 is greater than a size of the display 252, so that the display 252 is completely covered by the touch-sensitive surface 251. Alternatively, the touch-sensitive surface 251 may be disposed on the front facet of the mobile phone 200 in a full panel form, in other words, all touches performed by the user on the front facet of the mobile phone 200 can be sensed by the mobile phone. In this way, full touch control experience on the front facet of the mobile phone can be implemented. In some other embodiments, the touch-sensitive surface 251 is disposed on the front facet of the mobile phone 200 in a full panel form, and the display 252 may also be disposed on the front facet of the mobile phone 200 in a full panel form. In this way, a bezel-less structure on the front facet of the mobile phone can be implemented. In some other embodiments of this application, the touchscreen 250 may further include a series of pressure sensor arrays, so that the mobile phone can sense pressure exerted by the touch event on the touchscreen 250.

The one or more sensors 206 are, for example, an optical sensor, a motion sensor, and another sensor. Specifically, the optical sensor may include an ambient light sensor and a proximity sensor. The ambient light sensor may adjust luminance of the display of the touchscreen 250 based on ambient light luminance. The proximity sensor may power off the display when the mobile phone 200 approaches ears. As one of motion sensors, an accelerometer sensor may detect a magnitude of acceleration in each direction (usually, in three axes), may detect a magnitude and a direction of gravity when the accelerometer sensor is stationary, and may be used in an application for identifying a posture of the mobile phone (for example, screen switching between a landscape mode and a portrait mode, a related game, and magnetometer posture calibration), a vibration identification-related function (for example, a pedometer or a knock), and the like.

In some embodiments of this application, the sensor 206 may further include a fingerprint sensor. For example, a fingerprint sensor may be disposed on the back facet of the mobile phone 200 (for example, below a rear-facing camera), or a fingerprint sensor may be disposed on the front facet of the mobile phone 200 (for example, below the touchscreen 250). In addition, the fingerprint sensor may be disposed on the touchscreen 250 to implement a fingerprint recognition function, in other words, the fingerprint sensor and the touchscreen 250 may be integrated to implement the fingerprint recognition function of the mobile phone 200. In this case, the fingerprint sensor may be disposed on the touchscreen 250 to serve as a part of the touchscreen 250, or may be disposed on the touchscreen 250 in another manner. In addition, the fingerprint sensor may be further implemented as a full-panel fingerprint sensor, so that the touchscreen 250 can be considered as a panel on which fingerprint collection may be performed at any location. In some embodiments, the fingerprint sensor may process a collected fingerprint (for example, verify the collected fingerprint), and send a fingerprint processing result (for example, a result of whether the verification on the fingerprint succeeds) to the processor 201, so that the processor 201 performs corresponding processing based on the fingerprint processing result. In some other embodiments, the fingerprint sensor may further send a collected fingerprint to the processor 201, so that the processor 201 processes the fingerprint (for example, verifies the fingerprint). The fingerprint sensor in this embodiment of this application may use any type of sensing technology, which includes but is not limited to an optical sensing technology, a capacitive sensing technology, a piezoelectric sensing technology, an ultrasonic sensing technology, and the like. In addition, for a specific technical solution of integrating a fingerprint sensor into the touchscreen in this embodiment of this application, refer to Patent Application No. US 2015/0036065 A1 filed with the United States Patent and Trademark Office and entitled "FINGERPRINT SENSOR IN ELECTRONIC DEVICE. In addition, other sensors such as a gyroscope, a barometer, a hygrometer, a thermometer, and an infrared sensor that may be further disposed on the mobile phone 200 are not described herein.

The Wi-Fi apparatus 207 is configured to provide network access complying with a Wi-Fi-related standard protocol for the mobile phone 200. The mobile phone 200 may access a Wi-Fi access point by using the Wi-Fi apparatus 207, to further help the user to receive and send an e-mail, browse a web page, access streaming media, and the like. The Wi-Fi apparatus 207 provides wireless broadband internet access for the user. In some other embodiments, the Wi-Fi apparatus 207 may also be used as a Wi-Fi wireless access point, and may provide Wi-Fi network access for another electronic device.

The peripheral interface 208 is configured to provide various interfaces for an external input/output device (for example, a keyboard, a mouse, an external display, an external memory, or a subscriber identity module card). For example, the mobile phone 200 is connected to the mouse by using a universal serial bus interface, and is connected to a subscriber identity module card provided by an operator, by using a metal contact on a card slot of the SIM card. For example, the mobile phone 200 may include two subscriber identity module card slots, and one SIM card provided by the operator may be inserted into each card slot. The peripheral interface 208 may be configured to couple the external input/output peripheral device to the processor 201 and the memory 203.

The mobile phone 200 may further include the power supply apparatus 209 (for example, a battery or a power management chip) configured to supply power to the components. The battery may be logically connected to the processor 201 by using the power management chip, to implement functions such as charging and discharging management and power consumption management by using the power supply apparatus 209.

The mobile phone 200 may further include a Bluetooth apparatus, a positioning apparatus, a camera (for example, a front-facing camera or a rear-facing camera), a flash, a micro projection apparatus, a near field communication (near field communication, NFC) apparatus, and the like, which are not shown in FIG. 2. Details are not described herein. The front-facing camera may be configured to capture facial feature information, and the processor 201 may perform facial recognition on the facial feature information, to perform subsequent processing.

The following embodiments may be all implemented in the mobile phone 200 having the foregoing hardware structure. The following describes the embodiments of this application in detail by using the mobile phone 200 as an example.

To reduce a tariff of mobile data and improve interaction performance between the mobile phone 200
and the user when the user uses an application installed on the mobile phone 200, in a possible implementation, the mobile phone 200 automatically determines a correspondence between an application and a SIM card. When detecting an operation of enabling a first application by the user, the mobile phone 200 performs a data service by using a SIM card corresponding to the first application, so as to implement a service of the first application on a network associated with the SIM card corresponding to the first application.

For example, WeChat and Baidu Maps are installed on the mobile phone 200, and a SIM card 1 and a SIM card 2 are preconfigured in the mobile phone 200. A data service package of the SIM card 1 is a Tencent King card, and a data service package of the SIM card 2 includes 5G national data. It is assumed that the mobile phone automatically determines that the correspondence between an application and a SIM card is that WeChat corresponds to the SIM card 1 and Baidu Maps corresponds to the SIM card 2. When performing a data service by using the SIM card 1, if the mobile phone 200 detects an operation of enabling WeChat by the user, the mobile phone 200 performs a data service by using the SIM card 1; or if the mobile phone 200 detects an operation of enabling Baidu Maps by the user, the mobile phone 200 switches to the SIM card 2 to perform a data service.

For example, when detecting that a SIM card is installed for the first time, the mobile phone 200 may automatically determine the correspondence between an application and a SIM card. For example, two SIM cards may be configured on the mobile phone 200. When a SIM card 1 and a SIM card 2 are installed on the mobile phone 200 for the first time, the mobile phone 200 automatically determines the correspondence between an application and a SIM card. For another example, in a case in which a SIM card 1 has been configured on the mobile phone 200, when a SIM card 2 is installed for the first time, the mobile phone 200 automatically determines the correspondence between an application and a SIM card. For another example, in a case in which a SIM card 2 has been configured on the mobile phone 200, when a SIM card 1 is installed for the first time, the mobile phone 200 automatically determines the correspondence between an application and a SIM card. It should be understood that the SIM card 1 and the SIM card 2 are different SIM cards, and have different data service packages. For example, the SIM card 1 is a Tencent King card, and the SIM card 2 is a Youku Ku card. A data service package of the Tencent King card is free of charge for applications (such as Tencent Video, WeChat, QQ, and QQ Browser) developed by Tencent and an application (such as League of Legends) represented by Tencent, and a data service package of the Youku Ku card is free of charge for Youku Video.

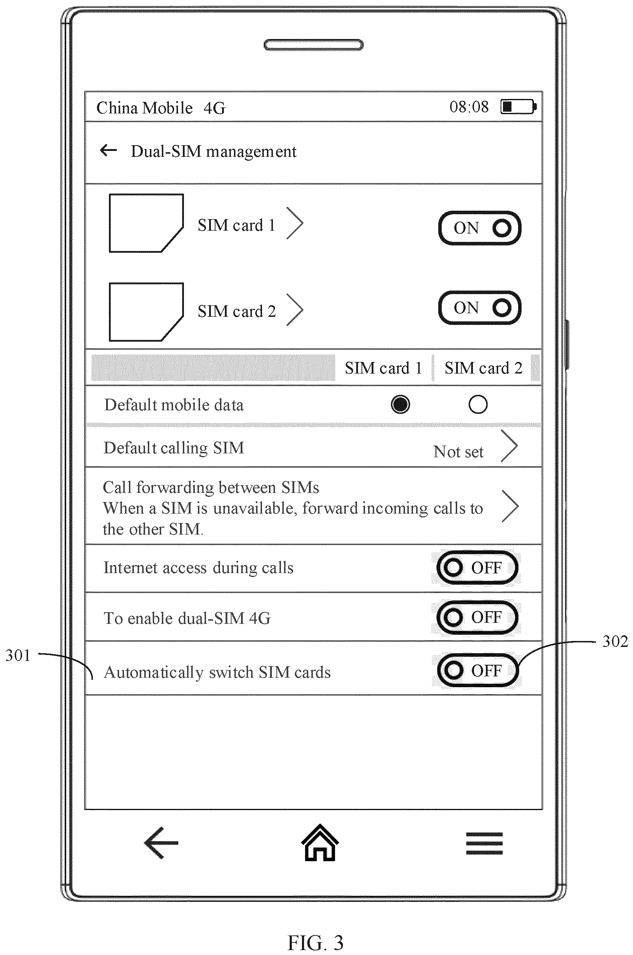

In some embodiments of this application, during specific implementation, to help the user control a function of the mobile phone 200, an option 301 of automatically switching SIM cards and a virtual button 302 thereof may be added to a settings screen of dual-SIM management shown in FIG. 1. The virtual button 302 is used to enable or disable a function of automatically switching SIM cards. For example, when the virtual button 302 is off (OFF), a settings screen of dual-SIM management may be shown in FIG. 3.

In some embodiments, if only one SIM card such as a SIM card 1 is installed on the mobile phone 200, in the settings screen of dual-SIM management shown in FIG. 3, a related option of a SIM card 2, for example, a SIM card 2 option of default mobile data is dimmed, an option of enabling call forwarding between SIM cards, an option of enabling dual-SIM 4G and a virtual button thereof, and an option 301 of automatically switching SIM cards and a virtual button 302 thereof are dimmed, and the user cannot perform operations on dimmed options or virtual buttons. If no SIM card is installed on the mobile phone 200, both options and virtual buttons in the settings screen of dual-SIM management shown in FIG. 3 are dimmed, and the user cannot perform operations on the options and the virtual buttons in the settings screen of dual-SIM management.

For example, when a Tencent King card and a Youku Ku card are installed on the mobile phone 200, for example, in the settings screen of dual-SIM management shown in FIG. 3, the SIM card 1 is the Tencent King card and the SIM card 2 is the Youku Ku card, it is assumed that applications installed on the mobile phone 200 are Tencent Video, Youku Video, iQIYI Video, WeChat, Honor of Kings, QQ Browser, and League of Legends. If the mobile phone 200 detects an operation of touching the virtual button 302 by the user, so that the virtual button 302 is on (ON), the mobile phone 200 may automatically determine the correspondence between an application and a SIM card. In some embodiments, the mobile phone 200 may intelligently match the correspondence between an application and a SIM card based on a package name of an application installed on the mobile phone 200, data service package information of the SIM card 1, and data service package information of the SIM card 2.

That the application is Tencent Video is used as an example. A package name of Tencent Video includes a keyword "tencent", the data service package information of the SIM card 1 includes the keyword "tencent", and the data service package information of the SIM card 2 includes a keyword "youku". Because the keyword included in the data service package information of the SIM card 1 is the same as the keyword included in the package name of Tencent Video, it is determined that a SIM card corresponding to Tencent Video is the SIM card 1. By analogy, it is learned that a SIM card corresponding to Youku Video is the SIM card 2, a SIM card corresponding to WeChat is the SIM card 1, a SIM card corresponding to Honor of Kings is the SIM card 1, a SIM card corresponding to QQ Browser is the SIM card 1, a SIM card corresponding to League of Legends is the SIM card 1, and iQIYI Video correspond to neither the SIM card 1 nor the SIM card. It should be understood that a keyword in a package name of an application and a keyword in data service package information may be agreed on in advance between a service provider or a device vendor and an operator.

In some other embodiments, data service package information of a SIM card may further include an identifier of an application. The mobile phone 200 may further intelligently match the correspondence between an application and a SIM card based on the identifier of the application that is included in the package information of the SIM card. In an example of WeChat, the data service package information of the SIM card 1 includes a name of WeChat, and the mobile phone 200 may further intelligently match a correspondence between WeChat and the SIM card 1 based on the name of WeChat that is included in the data service package information of the SIM card 1. In addition, the mobile phone 200 may further intelligently match the correspondence between an application and a SIM card in another manner. For example, the mobile phone 200 may further obtain, from a network server based on package information of a SIM card, an application corresponding to the package information of the SIM card, and then intelligently match the correspondence between an application and a SIM card based on the application that is obtained from the network server and that corresponds to the package information of the SIM card. In an example of a Tencent King card, the mobile phone 200 obtains, from the network server, an application corresponding to the Tencent King card. For example, applications that are obtained by the mobile phone 200 from the network and that correspond to the Tencent King card are WeChat, QQ Browser, Tencent Video, Honor of Kings, and QQ. If applications installed on the mobile phone 200 include WeChat, Tencent Video, and Honor of Kings, the mobile phone 200 may automatically match the applications WeChat, Tencent Video, and Honor of Kings with the Tencent King card. A manner of intelligently matching the correspondence between an application and a SIM card by the mobile phone 200 is not limited in this embodiment of this application.

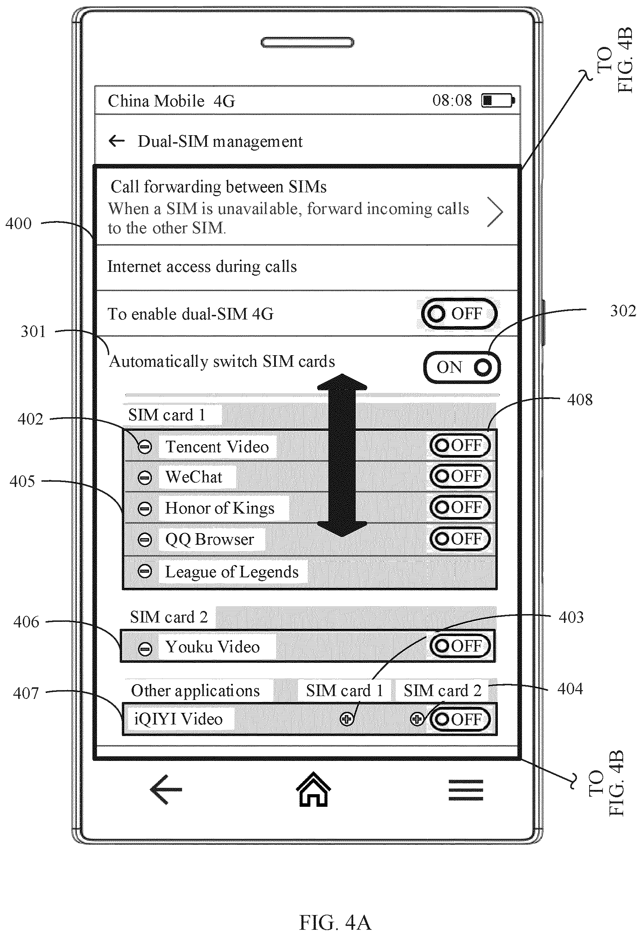

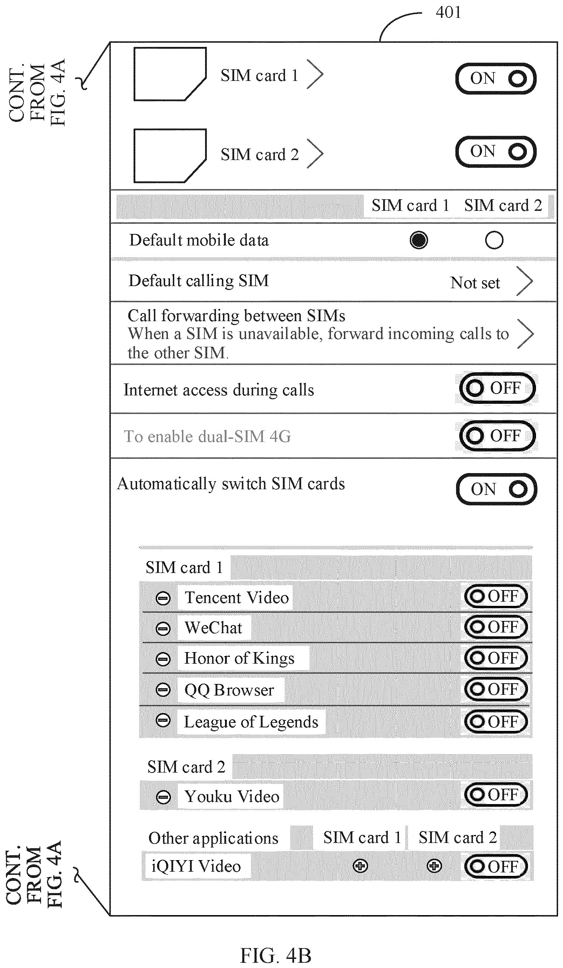

In some embodiments, a result of the intelligently matched correspondence between an application and a SIM card may be displayed in a settings screen of dual-SIM management, for example, a settings screen of dual-SIM management shown in FIG. 4A and FIG. 4B. It can be learned from the settings screen of dual-SIM management shown in FIG. 4A and FIG. 4B that an application list 405 corresponding to a SIM card 1 includes Tencent Video, WeChat, Honor of Kings, QQ Browser, and League of Legends, an application list 406 corresponding to a SIM card 2 includes Youku Video, and a list 407 of other applications includes iQIYI Video.

It should be understood that the user may slide up and down in an area 400 shown in FIG. 4A and FIG. 4B to display content at a corresponding position on a screen 401 in the area 400. In addition, in some other embodiments of this application, the user may further adjust, based on a requirement of the user, a result of the correspondence that is between an application and a SIM card and that is intelligently matched by the mobile phone 200. For example, when detecting that the user taps or touches an icon 402, the mobile phone 200 deletes Tencent Video from the list 405 in response to the operation that the user taps or touches the icon 402, to remove a correspondence between Tencent Video and the SIM card 1. For another example, after the correspondence between Tencent Video and the SIM card 1 is removed, the mobile phone 200 may automatically add Tencent Video to the list 407 of other applications. For still another example, for an application such as iQIYI Video corresponding to neither the SIM card 1 nor the SIM card 2, when detecting that the user taps or touches an icon 403, in response to the operation that the user taps or touches the icon 403, the mobile phone 200 adds iQIYI Video to the application list 405 corresponding to the SIM card 1, and deletes iQIYI Video from the list 407 of other applications, to establish a correspondence between iQIYI Video and the SIM card 1. When detecting that the user taps or touches an icon 404, in response to the operation that the user taps or touches the icon 404, the mobile phone 200 adds iQIYI Video to the application list 406 corresponding to the SIM card 2, and deletes iQIYI Video from the list 407 of other applications, to establish a correspondence between iQIYI Video and the SIM card 2.

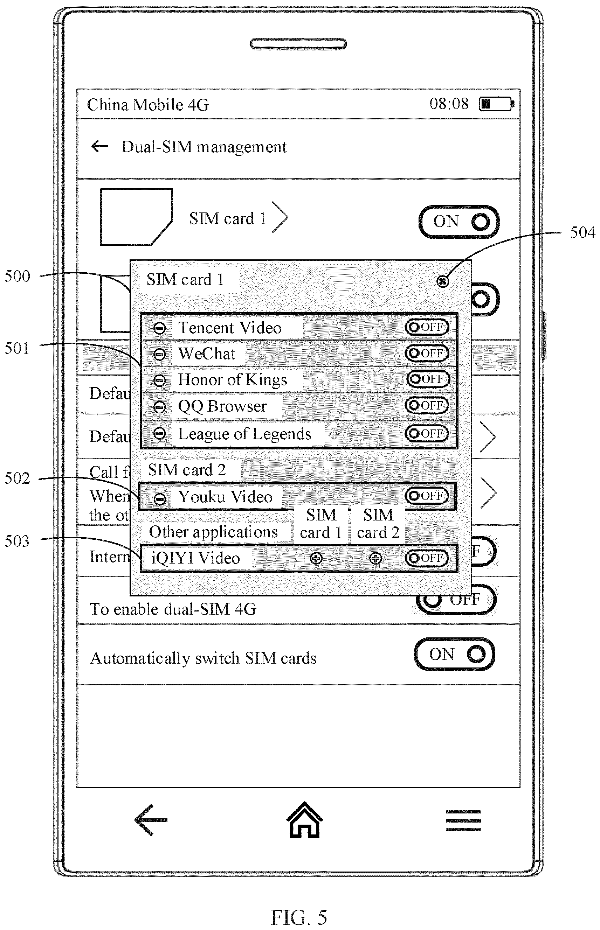

For example, a result of the intelligently matched correspondence between an application and a SIM card may be further displayed in a dialog box 500 shown in FIG. 5. In some embodiments, when detecting that the user taps or touches an icon 504, the mobile phone 200 closes the dialog box 500 in response to the operation that the user taps or touches the icon 504. In some other embodiments, a list 501 corresponding to a SIM card 1, a list 502 corresponding to a SIM card 2, and a list 503 of other applications may be modified based on a user requirement. Alternatively, it should be understood that the application list 501 corresponding to the SIM card 1, the application list 502 corresponding to the SIM card 2, and the list 503 of other applications in the embodiments of this application cannot be edited and modified by the user.

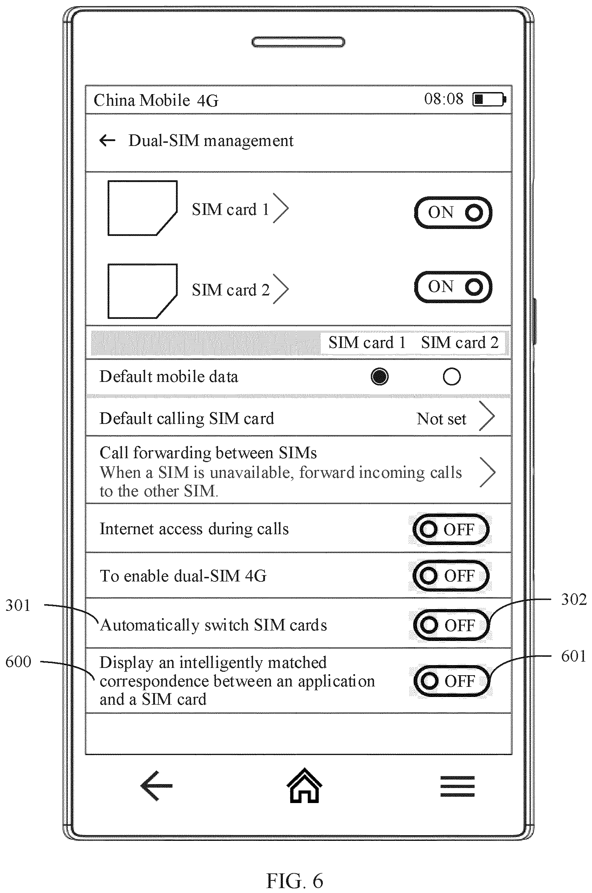

For a display manner, shown in FIG. 5, of the result of the intelligently matched correspondence between an application and a SIM card, to improve controllability of the user on the dialog box 500, for example, an option 600 of displaying the intelligently matched correspondence between an application and a SIM card and a virtual button 601 thereof may be added to the settings screen of dual-SIM management shown in FIG. 3. The virtual button 601 is used to enable or disable a function of displaying the intelligently matched correspondence between an application and a SIM card. For example, when the virtual button 601 is off (OFF), a settings screen of dual-SIM management may be shown in FIG. 6. In a scenario of the settings screen dual-SIM management shown in FIG. 6, if the mobile phone 200 detects that the user touches the virtual button 302, so that the virtual button 302 is on (ON), the mobile phone automatically determines the correspondence and performs automatic switching, but does not display the dialog box 500 of the result of the intelligently matched correspondence between an application and a SIM card. When the virtual button 601 is on (ON), if the mobile phone 200 detects that the user touches the virtual button 302, so that the virtual button 302 is on (ON), the mobile phone 200 displays the dialog box 500 of the result of the intelligently matched correspondence between an application and a SIM card.

It should be understood that the display manner of the result of the intelligently matched correspondence between an application and a SIM card is not limited in the embodiments of this application. The foregoing description is merely an example.

In addition, when the mobile phone 200 detects that a new application is installed, or a new SIM card is replaced, or an installed application is uninstalled, or a specific SIM card (for example, a SIM card 1, or a SIM card 2, or both a SIM card 1 and a SIM card 2) is detached, if a virtual button (for example, the virtual button 302 shown in FIG. 3) of an option of automatically switching SIM cards is on (ON), the mobile phone 200 updates the correspondence between an application and a SIM card.

For example, in the settings screen of dual-SIM management shown in FIG. 3, the SIM card 1 is a Tencent King card and the SIM card 2 is a Youku Ku card. If applications installed on the mobile phone 200 are Tencent Video, Youku Video, iQIYI Video, WeChat, Honor of Kings, QQ Browser, and League of Legends, in the foregoing scenario, if a new application such as Alipay is installed on the mobile phone 200, when the virtual button 302 is on, a correspondence between Alipay and a SIM card is automatically determined based on a package name of Alipay, package information of the SIM card 1, and package information of the SIM card 2. Because the SIM card 1 is the Tencent King card and the SIM card 2 is the Youku Ku card, Alipay corresponds to neither the SIM card 1 nor the SIM card 2. In this case, for example, when the display manner of the result of the correspondence between an application and a SIM card is shown in FIG. 4A and FIG. 4B, Alipay is added to the list 407 of other applications. For another example, if the mobile phone 200 detects that an iQIYI package card replaces the Youku Ku card to serve as the SIM card 2, the mobile phone 200 re-determines an application corresponding to the SIM card 2. For example, if the mobile phone 200 determines, based on the data service package information of the SIM card 2 and a package name of the application, that the application corresponding to the SIM card 2 is iQIYI Video, the mobile phone 200 replaces Youku Video in the list 406 corresponding to the SIM card 2 with iQIYI Video, and replaces iQIYI Video in the list 407 of other applications with Youku Video. For still another example, if the mobile phone 200 detects that Tencent Video is uninstalled, the mobile phone 200 deletes Tencent Video from the list 405 corresponding to the SIM card 1. For yet another example, if the mobile phone 200 detects that the SIM card 2 is detached, the mobile phone 200 deletes the list 406 corresponding to the SIM card 2, or clears the list 406 corresponding to the SIM card 2. In some embodiments, if the mobile phone 200 detects that the SIM card 2 is detached, the mobile phone 200 clears the list 406 corresponding to the SIM card 2, and adds an application (such as Youku Video) in the list 406 corresponding to the SIM card 2 to the list 407 of other applications.

The following describes automatic SIM card switching in detail by using a settings screen of dual-SIM management shown in FIG. 4A and FIG. 4B as an example.

In some embodiments, when switching to the SIM card corresponding to the first application to perform the data service, the mobile phone 200 displays prompt information on a screen of the first application. The prompt information is used to prompt the user that a SIM card used when the electronic device performs a data service is the SIM card corresponding to the first application.

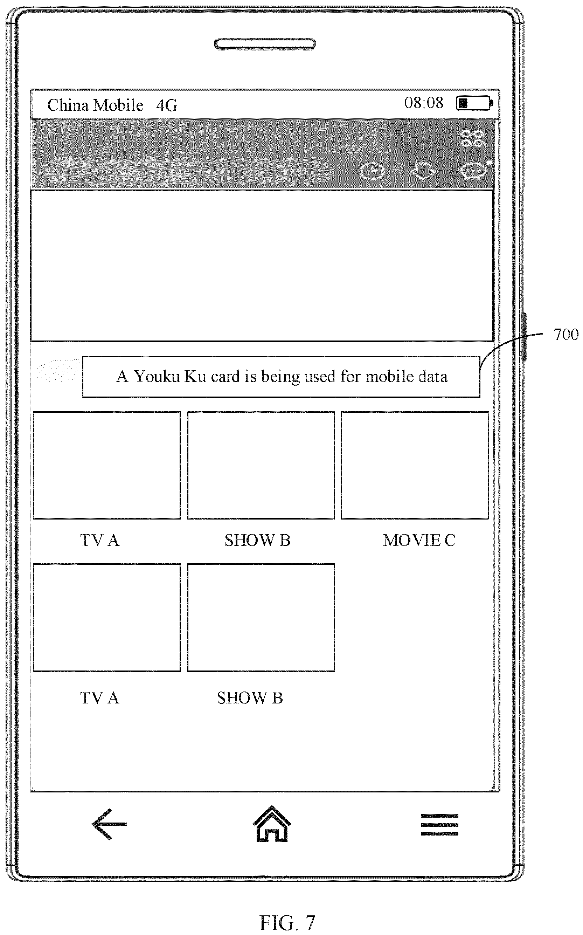

For example, in a case in which the virtual button 302 is on, when the mobile phone 200 detects an operation of enabling Youku Video by the user, the mobile phone 200 automatically determines, based on the correspondence between a SIM card and an application, that a SIM card corresponding to Youku Video is a SIM card 2, and performs a data service by using the SIM card 2, to implement a service of Youku Video on a network associated with the SIM card 2, in other words, perform data communication with the network by using the SIM 2, use a data quota (for example, free data) in a package of the SIM 2, and collect statistics about data in an account of the SIM 2. For example, to help the user determine a specific SIM card used for current mobile data when the mobile phone 200 runs Youku Video, the mobile phone 200 may display a screen of Youku Video in response to the operation of enabling Youku Video by the user, and display prompt information on the screen of Youku Video. The prompt information is used to prompt the user of a specific SIM card used for a current data service or a specific SIM card whose data service package is used. For example, the prompt information may be that a Youku Ku card is used for the current mobile data. For example, prompt information 700 may be shown in FIG. 7 when being displayed. In some embodiments, the prompt information is displayed for preset duration only after Youku Video is enabled, for example, two seconds, and then the prompt information is hidden. It should be understood that the operation of enabling Youku Video by the user may be an operation of tapping or touching an icon of Youku Video by the user, may be a gesture of enabling Youku Video, or the like. The operation of enabling Youku Video by the user is not limited.

It can be learned from the settings screen of dual-SIM management shown in FIG. 4A and FIG. 4B that, if the SIM card 1 is used for default mobile data set by the user, a default SIM card is the SIM card 1. When the mobile phone 200 performs a data service by using the default SIM card, the mobile phone 200 performs a data service by using the SIM card 1. In some embodiments, after detecting that the user disables Youku Video, the mobile phone 200 switches back to the default SIM card (such as the SIM card 1). In some other embodiments, after detecting that Youku Video exits the foreground, the mobile phone 200 switches back to the default SIM card.

In addition, before the mobile phone 200 enables Youku Video, applications that are run when the mobile phone 200 performs a data service by using the SIM card 1 include WeChat, Honor of Kings, and QQ Browser. After the mobile phone 200 detects the operation of enabling Youku Video by the user, and switches to the SIM card 2 from the SIM card 1 to perform a data service, the mobile phone 200 may continue to run WeChat, Honor of Kings, and QQ Browser in the background, or the mobile phone 200 may disable WeChat, Honor of Kings, and QQ Browser, or the mobile phone 200 may interrupt interaction between WeChat, Honor of Kings, and QQ Browser and a network, and resume the interaction between WeChat, Honor of Kings, and QQ Browser and the network after switching back to the SIM card 1 to perform a data service.

Moreover, to meet a requirement of the user, in some other embodiments, the mobile phone 200 may determine, based on settings of an application by the user, whether to continue to run the application in the background after SIM card switching occurs. The settings screen of dual-SIM management shown in FIG. 4A and FIG. 4B is used as an example. For example, the user may turn on or turn off a virtual button 408, to manage whether Tencent Video can be run in the background when the SIM card 2 is used for current mobile data. For example, before switching to the SIM card 2, the mobile phone 200 runs a service of Tencent Video by using the SIM card 1. In this case, after the mobile phone 200 detects the operation of enabling Youku Video by the user, and before the mobile phone 200 switches to the SIM card 2 or in a process in which the mobile phone 200 switches from the SIM card 1 to the SIM card 2, if the mobile phone 200 detects that the virtual button 408 is off (OFF), the mobile phone 200 disables Tencent Video and does not continue to run Tencent Video in the background after switching to the SIM card 2 to perform a data service. For another example, before switching to the SIM card 2, the mobile phone 200 runs a service of Tencent Video by using the SIM card 1. In this case, after the mobile phone 200 detects the operation of enabling Youku Video by the user, and before the mobile phone 200 switches to the SIM card 2 or in a process in which the mobile phone 200 switches from the SIM card 1 to the SIM card 2, if the mobile phone 200 detects that the virtual button 408 is on (ON), the mobile phone 200 continues to run Tencent Video in the background after switching to the SIM card 2. In addition, the user may further set WeChat, Honor of Kings, QQ Browser, League of Legends, Youku Video, and iQIYI Video correspondingly based on a requirement.

It should be noted that, to enable the user to receive a notification message and the like in time, for some low-data applications such as instant messaging applications (such as WeChat and QQ) and browsers, the user may turn on, based on a requirement, the virtual button 408 corresponding to WeChat, QQ, QQ Browser, and the like, so that these low-data applications can continue to be run in the background after SIM card switching occurs. For example, for some low-data applications, the mobile phone 200 may automatically turn on the virtual button 408 that corresponds to these applications and that is configured to control whether the applications continue to be run in the background after SIM card switching occurs. For example, the mobile phone 200 may determine a low-data application based on usage of data of each application that is obtained through statistics collection. For another example, the mobile phone 200 may automatically turn on the virtual button 408 that corresponds to the instant messaging applications (such as QQ and WeChat) and that is configured to control whether the applications continue to be run in the background after SIM card switching occurs, so that the user can receive a message in time.

For iQIYI Video in the list 407 of other applications shown in FIG. 4A and FIG. 4B, in some embodiments, the mobile phone 200 may implement a service of iQIYI Video on the default SIM card. For example, the user sets default mobile data to the SIM card 1. After detecting an operation of enabling iQIYI Video by the user, the mobile phone 200 implements the service of iQIYI Video on a network associated with the SIM card 1.

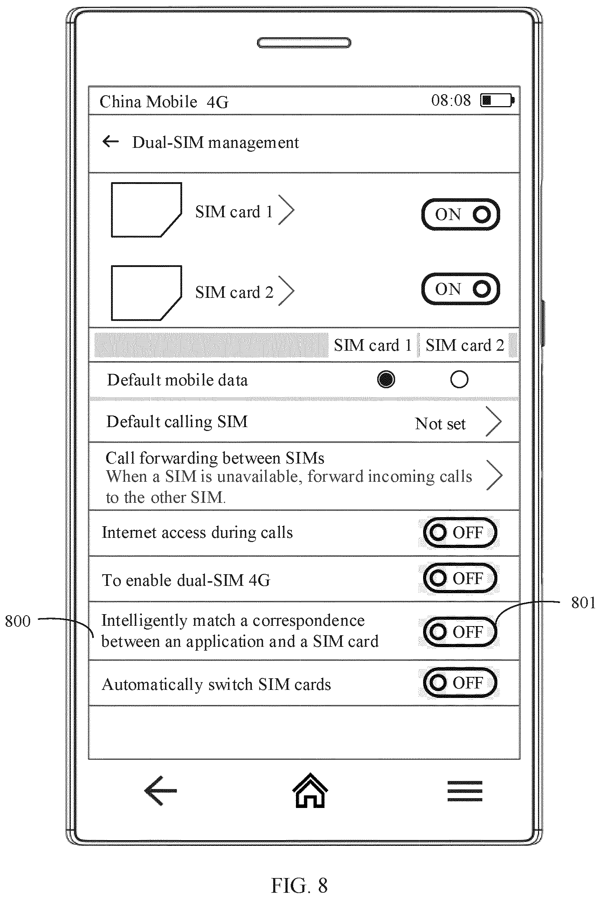

It should be understood that the mobile phone 200 may first intelligently match the correspondence between an application and a SIM card. Therefore, when the mobile phone 200 detects the operation of enabling the first application by the user, if a SIM card currently used by the mobile phone 200 to perform a data service is different from the SIM card corresponding to the first application, the mobile phone 200 automatically switches to the SIM card corresponding to the first application, to implement a data service by using the SIM card corresponding to the first application. If a SIM card currently used by the mobile phone 200 to perform a data service is the SIM card corresponding to the first application, the mobile phone 200 implements a data service by using the SIM card currently used by the mobile phone 200 to perform the data service. Therefore, during specific implementation, an option 800 of intelligently matching the correspondence between an application and a SIM card and a virtual button 801 thereof may be further added to the settings screen of dual-SIM management shown in FIG. 4A and FIG. 4B. The virtual button 801 is used to instruct to enable or disable the intelligently matched correspondence between an application and a SIM card. For example, when the virtual button 801 is off (OFF), a settings screen of dual-SIM management may be shown in FIG. 8. In this scenario, after detecting that the virtual button 801 is on, the mobile phone 200 matches the correspondence between an application and a SIM card. For a specific matching manner, refer to the foregoing manner of determining the correspondence between an application and a SIM card. Details are not described herein again.

In another possible implementation, when detecting the operation of enabling the first application by the user, the mobile phone 200 automatically determines the SIM card corresponding to the first application, and then performs a data service by using the SIM card corresponding to the first application.

For example, a SIM card 1 and a SIM card 2 are preconfigured in the mobile phone 200. A data service package of the SIM card 1 is different from a data service package of the SIM card 2. When performing a data service by using the SIM card 2, the mobile phone 200 detects an operation of enabling Taobao by the user, and automatically determines that Taobao corresponds to the SIM card 1. The mobile phone automatically switches to the SIM card 1 to perform a data service of Taobao.

For example, the mobile phone 200 may automatically determine, based on a package name of an application and data service package information of a SIM card, the SIM card corresponding to the application. For example, when a keyword in the package name of the application is the same as a keyword included in the data service package information of the SIM card, the application corresponds to the SIM card. The keyword may be agreed on in advance between a service provider (such as an application developer) or a device vendor and an operator. That the application is Youku Video is used as an example. The mobile phone 200 may intelligently match, based on a package name of Youku Video, package information of the SIM card 1, and package information of the SIM card 2, a SIM card corresponding to Youku Video. For example, a keyword in the package of the SIM card 1 is "tencent", a keyword in the package of the SIM card 2 is "youku", and a keyword in the package name of Youku Video is "youku". Because the keyword of the SIM card 2 is the same as the keyword in the package name of Youku Video, the SIM card that is intelligently matched by the mobile phone 200 and that corresponds to Youku Video is the SIM card 2.

In addition, the data service package information of the SIM card may further include a name of an application, and the mobile phone 200 may automatically determine, based on the name of the application that is included in the data service package information, a SIM card corresponding to the application. It should be understood that, in the embodiments of this application, the correspondence between an application and a SIM card may be automatically determined in another manner. For this, refer to the foregoing embodiment. This is not limited herein.

During specific implementation, in some embodiments, each time the mobile phone 200 detects the operation of enabling the first application by the user, the mobile phone 200 may intelligently match, based on a package name of the first application and data service package information of the SIM card, the SIM card corresponding to the first application.

In some other embodiments, when detecting the operation of enabling the first application by the user, the mobile phone 200 may search the prestored correspondence list between an application and a SIM card for the SIM card corresponding to the first application. If the correspondence list between an application and a SIM card does not store a correspondence between the first application and the SIM card, the SIM card corresponding to the first application may be intelligently matched based on the package name of the first application and the data service package information of the SIM card, and then the correspondence between the first application and the SIM card is stored in the correspondence list between an application and a SIM card. When detecting the operation of enabling the first application by the user again, the mobile phone 200 may search the correspondence list for the SIM card corresponding to the first application.

To help the user control a function of the mobile phone, an option 301 of automatically switching SIM cards and a virtual button 302 thereof may be added to a settings screen of dual-SIM management shown in FIG. 1. The virtual button 302 is used to enable or disable a function of automatically switching SIM cards. For example, when the virtual button 302 is off (OFF), a settings screen of dual-SIM management may be shown in FIG. 3.

For example, in the settings screen of dual-SIM management shown in FIG. 3, when the SIM card 1 is a Tencent King card and the SIM card 2 is a Youku Ku card, it is assumed that applications installed on the mobile phone 200 are Tencent Video, Youku Video, iQIYI Video, WeChat, Honor of Kings, QQ Browser, and League of Legends. When the mobile phone 200 detects an operation of touching the virtual button 302 by the user, so that the virtual button 302 is on (ON), if the mobile phone 200 detects an operation of enabling Tencent Video by the user, the mobile phone 200 automatically determines a SIM card corresponding to Tencent Video, and then switches to the SIM card corresponding to Tencent Video to perform a data service, to implement a service of Tencent Video on a network associated with the SIM card corresponding to Tencent Video.

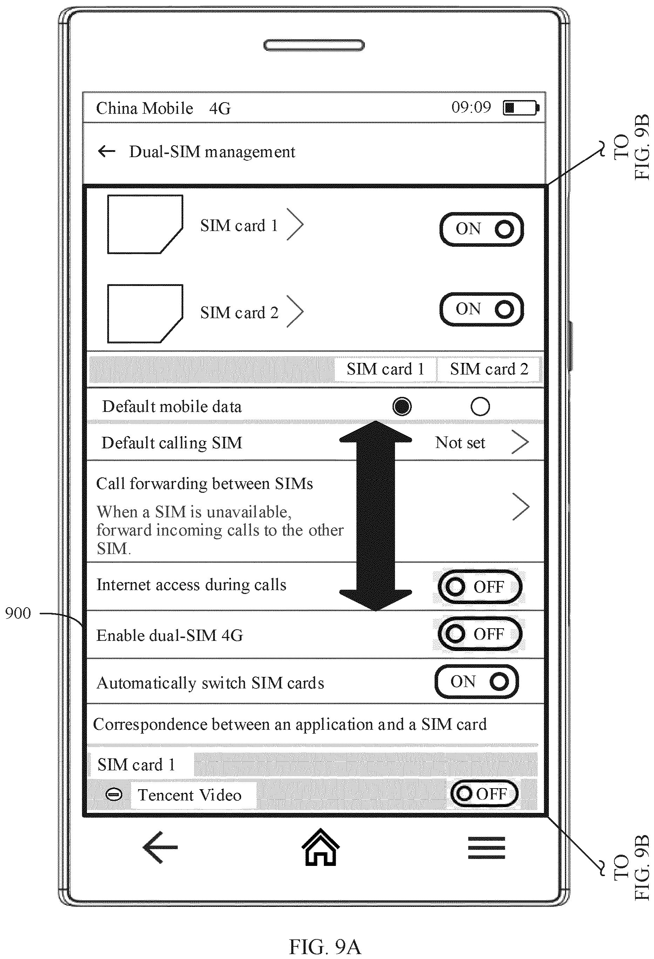

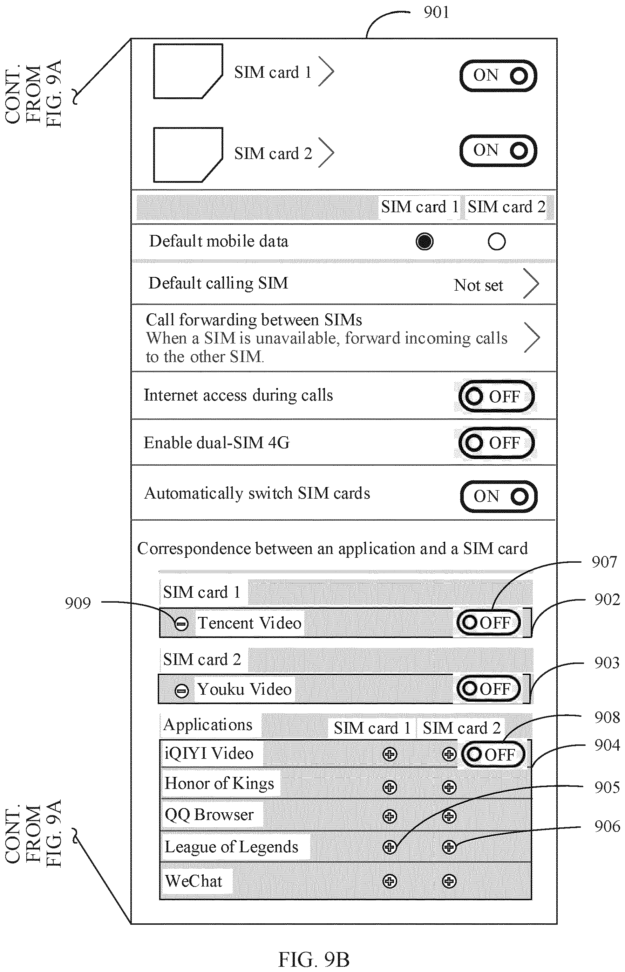

For example, the user enables Tencent Video, and the mobile phone 200 may obtain, based on a package name of Tencent Video, package information of the SIM card 1, and package information of the SIM card 2, the SIM card corresponding to Tencent Video. For example, if the obtained SIM card corresponding to Tencent Video is the SIM card 1, Tencent Video is stored in a list corresponding to the SIM card 1. For example, a list used to store the correspondence between an application and a SIM card may be displayed on a settings screen of dual-SIM management. For example, the settings screen of dual-SIM management is shown in FIG. 9A and FIG. 9B. Tencent Video is stored in a list 902 corresponding to the SIM card 1. If the user has previously enabled Youku Video, a list 903 corresponding to the SIM card 2 includes Youku Video, and a SIM card corresponding to Youku Video is the SIM card 2. A list 904 of applications includes iQIYI Video, Honor of Kings, QQ Browser, League of Legends, and WeChat. The applications in the list 904 of applications include neither the application in the list 902 corresponding to the SIM card 1 nor the application included in the list 903 corresponding to the SIM card 2. However, the applications in the list 904 of applications include an application that has not been enabled by the user, and an application corresponding to neither the SIM card 1 nor the SIM card 1. It should be understood that, in some embodiments, before the user enables the applications installed on the mobile phone 200, the list corresponding to the SIM card 1 is empty, the list corresponding to the SIM card 2 is empty, and the applications included in the list 904 of applications may be all the applications installed on the mobile phone 200.

It should be understood that the user may slide up and down in an area 900 shown in FIG. 9A and FIG. 9B to display content at a corresponding position on a screen 901 in the area 900. In addition, in some other embodiments of this application, the user may adjust, based on a requirement of the user, a list 902 corresponding to the SIM card 1 and a list 903 corresponding to the SIM card 2. For example, when detecting that the user taps or touches an icon 909, the mobile phone 200 deletes Tencent Video in the list 902 in response to the operation that the user taps or touches the icon 909, to remove a correspondence between Tencent Video and the SIM card 1. For another example, after the correspondence between Tencent Video and the SIM card 1 is removed, the mobile phone 200 may automatically add Tencent Video to a list 904 of applications. For still another example, when detecting that the user taps or touches an icon 905, in response to the operation that the user taps or touches the icon 905, the mobile phone 200 adds League of Legends to a list 905 corresponding to the SIM card 1, and deletes League of Legends from the list 904 of applications, to establish a correspondence between League of Legends and the SIM card 1. For yet another example, when detecting that the user taps or touches an icon 906, in response to the operation that the user taps or touches the icon 906, the mobile phone 200 adds League of Legends to the list 903 corresponding to the SIM card 2, and deletes League of Legends from the list 904 of applications, to establish a correspondence between League of Legends and the SIM card 2.

In addition, it can be learned from the settings screen of dual-SIM management shown in FIG. 9A and FIG. 9B that the SIM card 1 is used for default mobile data set by the user. That an application that is currently run by the mobile phone 200 in the foreground is Youku Video is used as an example. In some embodiments, if the mobile phone 200 detects that the user disables Youku Video, the mobile phone 200 switches from the SIM card 2 to a default SIM card (such as the SIM card 1). In some other embodiments, after detecting that Youku Video exits the foreground, the mobile phone 200 switches back to the default SIM card.

In addition, before the mobile phone 200 enables Youku Video, applications that are run by the mobile phone 200 include WeChat, Honor of Kings, and QQ Browser. After the mobile phone 200 enables Youku Video and switches to the SIM card 2, the mobile phone 200 may continue to run the WeChat, Honor of Kings, and QQ Browser in the background, or the mobile phone 200 may disable WeChat, Honor of Kings, and QQ Browser, or the mobile phone 200 may interrupt interaction between WeChat, Honor of Kings, and QQ Browser and a network, and resume the interaction between WeChat, Honor of Kings, and QQ Browser and the network after switching back to the SIM card 1.

Moreover, to meet a requirement of the user, in some other embodiments, the mobile phone 200 may determine, based on settings of an application by the user, whether to continue to run the application in the background after SIM card switching occurs. The settings screen of dual-SIM management shown in FIG. 9A and FIG. 9B is used as an example. For example, the user may turn on or turn off a virtual button 907, to manage whether Tencent Video can be run in the background when the SIM card 2 is used for current mobile data. For example, before switching to the SIM card 2, the mobile phone 200 runs a service of Tencent Video by using the SIM card 1. In this case, after the mobile phone 200 detects the operation of enabling Youku Video by the user, and before the mobile phone 200 switches to the SIM card 2 or in a process in which the mobile phone 200 switches from the SIM card 1 to the SIM card 2, if the mobile phone 200 detects that the virtual button 907 is off (OFF), the mobile phone 200 disables Tencent Video after switching to the SIM card 2. For another example, before switching to the SIM card 2, the mobile phone 200 runs a service of Tencent Video by using the SIM card 1. In this case, after the mobile phone 200 detects the operation of enabling Youku Video by the user, and before the mobile phone 200 switches to the SIM card 2 or in a process in which the mobile phone 200 switches from the SIM card 1 to the SIM card 2, if the mobile phone 200 detects that the virtual button 907 is on, the mobile phone 200 continues to run Tencent Video in the background after switching to the SIM card 2. In addition, the user may further correspondingly set Youku Video based on a requirement. If iQIYI Video, Honor of Kings, QQ Browser, League of Legends, and WeChat in the list 904 of applications have never been run in the foreground, corresponding virtual buttons are not displayed on the settings screen of dual-SIM management shown in FIG. 9A and FIG. 9B. For example, if the mobile phone 200 detects an operation of enabling iQIYI Video, but does not establish a correspondence between iQIYI Video and the SIM card 1 and the SIM card 2, a virtual button 908 of iQIYI Video is displayed in the list 904 of applications. The virtual button 908 is used to indicate whether iQIYI Video can continue to be run in the background when a SIM card currently used by the mobile phone 200 is switched from the default SIM card to another SIM card.

It should be further noted that, when the mobile phone 200 detects that a new application is installed, or a SIM card is replaced, or a specific application is enabled for the first time, or a specific installed application is uninstalled, or a specific SIM card is detached, the mobile phone 200 updates the correspondence between a SIM card and an application. For example, if the mobile phone 200 detects that a new application is installed, the mobile phone 200 adds a name of the new application to the list 904 of applications. For another example, if the mobile phone 200 detects that the SIM card 2 is replaced, the mobile phone 200 clears or deletes the list 903 corresponding to the SIM card 2. For example, an application such as Youku Video in the list corresponding to the SIM card 2 before the SIM card 2 is replaced is added to the list 904 of applications.

In addition, in the embodiments of this application, the data service package information of the SIM card 1 and the data service package information of the SIM card 2 may be preset by the user on the mobile phone 100, or may be obtained by the mobile phone 100 from an operator.

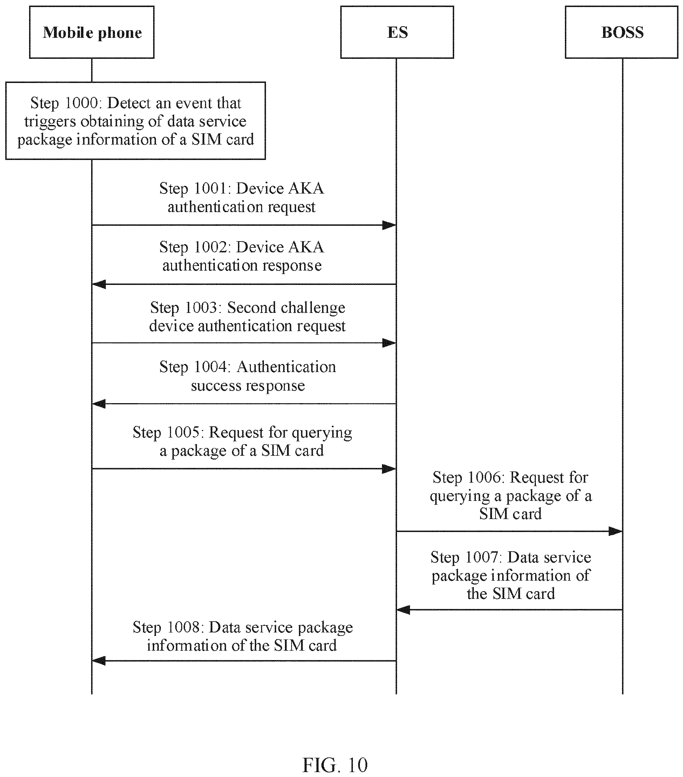

For example, FIG. 10 is a schematic flowchart of a possible method for obtaining data service package information of a SIM card from an operator. Specifically, the method includes the following steps.

Step 1000: The mobile phone 200 detects an event that triggers obtaining of the data service package information of the SIM card.

For example, when the SIM card is installed on the mobile phone, or the virtual button 302 or the virtual button 801 is on (ON), obtaining of the data service package information of the SIM card is triggered.

Step 1001: The mobile phone 200 sends a device authentication and key agreement (authentication and key agreement, AKA) authentication request to an entitlement server (entitlement server, ES).

Step 1002: After receiving the device AKA authentication request, the ES performs authentication on a device based on the device AKA authentication request, and after the authentication succeeds, sends a device AKA authentication response to the mobile phone 200, where the device AKA authentication response is used to instruct the mobile phone 200 to send a second challenge device authentication request.

Step 1003: After receiving the device AKA authentication response, the mobile phone 200 sends a second challenge device authentication request to the ES.

Step 1004: After receiving the second challenge device authentication request, the ES performs second authentication on the device based on the second challenge device authentication request, and after the authentication succeeds, sends an authentication success response to the mobile phone 200.

Step 1005: After receiving the authentication success response, the mobile phone 200 sends a request for querying a package of a SIM card to the ES, where the request for querying a package of a SIM card includes a card number of a SIM card 1 and a card number of a SIM card 2.

Step 1006: After receiving the request for querying a package of a SIM card, the ES sends the request for querying a package of a SIM card to a business and operation support system (business and operation support system, BOSS) of an operator.

For example, the SIM card 1 and the SIM card 2 are installed on the mobile phone 200, an operator of the SIM card 1 is China Unicom, and an operator of the SIM card 2 is China Mobile. In this case, the ES may send, based on the card number of the SIM card 1, a request for querying a package of the SIM card 1 to a BOSS of China Unicom, and send, based on the card number of the SIM card 2, a request for querying a package of the SIM card 2 to a BOSS of China Mobile. For example, a card number of a SIM card may be a mobile phone number, or may be an identifier that uniquely identifies the SIM card.

Step 1007: After receiving the request for querying a package of a SIM card, the BOSS feeds back the package information of the SIM card to the mobile phone 200. Optionally, in some embodiments, the BOSS may directly feed back the data service package information of the SIM card to the mobile phone, or may feed back the data service package information of the SIM card to the mobile phone by using the ES. This is not limited.

The data service package information of the SIM card further includes a keyword in addition to a usage amount and a remaining amount. The keyword is used to determine a correspondence between an application and a SIM card. For example, the keyword may be agreed up in advance between a device provider or an application developer and an operator. For example, a keyword included in package information of a Tencent King card is "tencent", and a keyword included in package information of a Youku Ku card is "youku". Alternatively, the keyword may be obtained by the mobile phone 200 from the package information based on a preset algorithm.

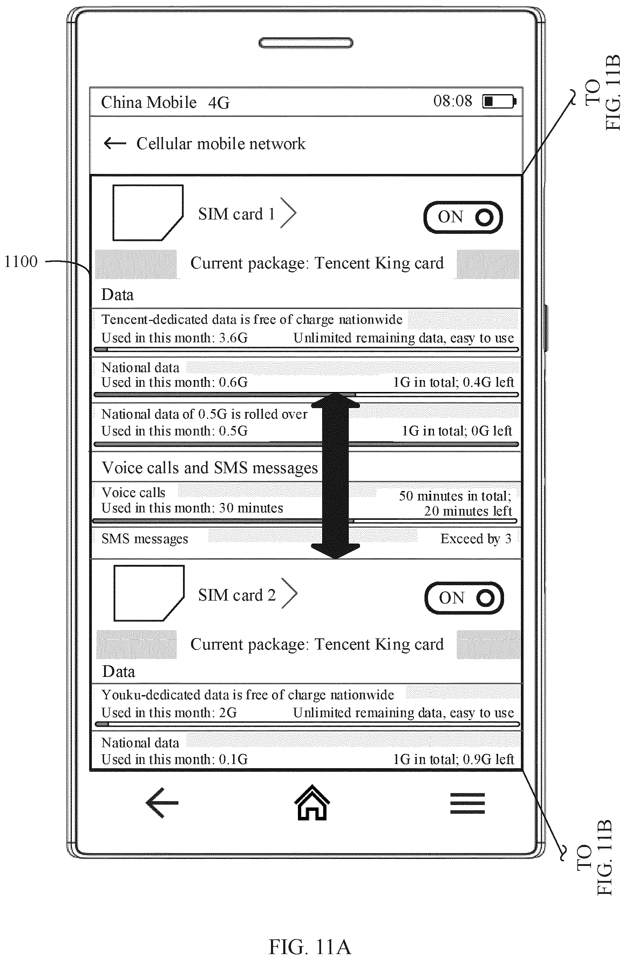

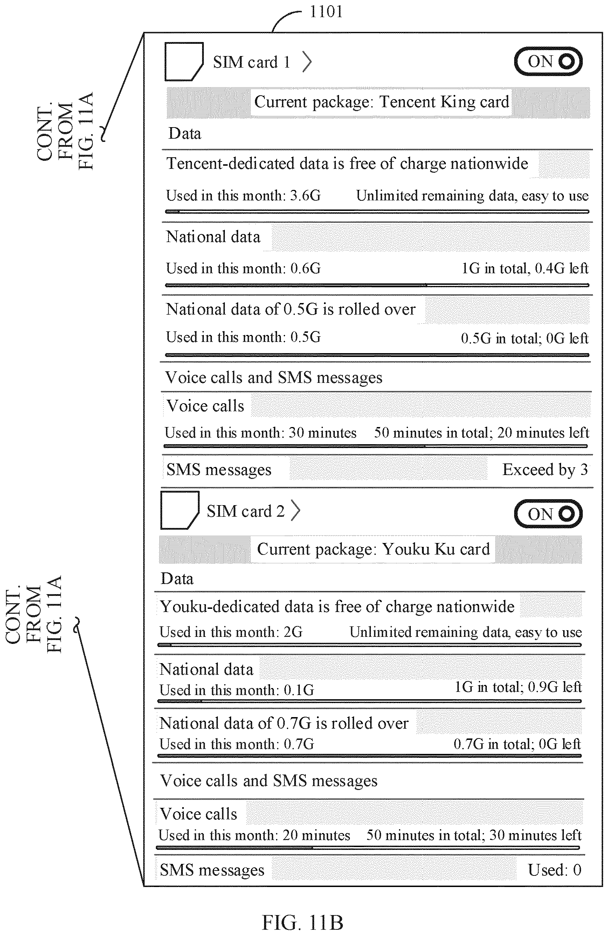

Step 1008: After receiving the data service package information of the SIM card that is sent by the BOSS, the mobile phone 200 stores the data service package information of the SIM card. Optionally, the mobile phone 200 may further display the data service package information of the SIM card on a screen of the mobile phone, for example, a screen shown in FIG. 11A and FIG. 11B.

The SIM card 1 is a Tencent King card, where Tencent-dedicated data is free and unlimited nationwide; national data is 1G and used data is 0.6G; national data of 0.5G is rolled over and 0G is left; free voice call duration is 50 minutes and used duration is 30 minutes; and five extra SMS messages are sent. The SIM card 2 is a Youku Ku card, where Youku Video-dedicated data is free and unlimited nationwide; national data is 1G and used data is 0.1G; national data of 0.7G is rolled over and 0G is left; free voice call duration is 50 minutes and used duration is 20 minutes; and no SMS message is sent. The user may perform an up-and-down slide operation in an area 1000 to display content at a corresponding position on a screen 1101 in the area 1100.

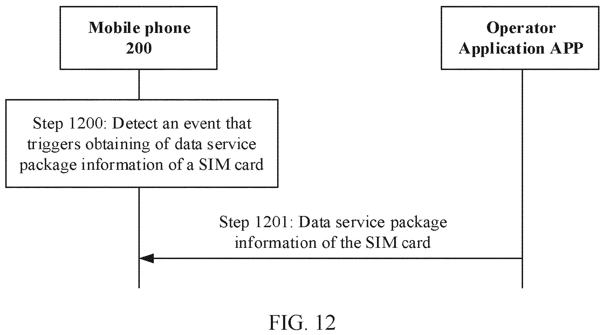

For example, FIG. 12 is a schematic flowchart of another possible method for obtaining data service package information of a SIM card from an operator. Specifically, the method includes the following steps.

Step 1200: The mobile phone 200 detects an event that triggers obtaining of the data service package information of the SIM card. The data service package information of the SIM card includes a keyword, and the keyword is similar to the keyword in the method shown in FIG. 10. Details are not described herein again.

Step 1201: The mobile phone 200 obtains, through a specific interface (such as a mobile data interface), the data service package information of the SIM card from an operator application (such as a mobile phone business hall) installed on the mobile phone 100, and stores the data service package information of the SIM card.

For example, if the SIM card is a SIM card of China Unicom, the mobile phone 200 obtains the data service package information of the SIM card from a mobile phone business hall of China Unicom. For another example, if the SIM card is a SIM card of China Mobile, the mobile phone 200 obtains the data service package information of the SIM card from a mobile phone business hall of China Mobile. For still another example, if the SIM card is a SIM card of China Telecom, the mobile phone 200 obtains the data service package information of the SIM card from a mobile phone business hall of China Telecom.

Optionally, the mobile phone 200 may further display the package information of the SIM card on a screen of a cellular mobile network. For a specific display manner, refer to the display manner in the foregoing embodiment. Details are not described herein again.

It should be noted that a manner of obtaining the data service package information of the SIM card is not limited in this embodiment of this application. It should be further understood that the mobile phone 200 may obtain the data service package information of the SIM card when detecting that the virtual button 302 is switched from "off" (OFF) to "on" (ON) for the first time, or the mobile phone 200 may obtain the data service package information of the SIM card when detecting that a new SIM card is installed for the first time, or the mobile phone 200 may obtain the data service package information of the SIM card when detecting that the SIM card is replaced, or the mobile phone 200 may obtain the data service package information of the SIM card when the virtual button 801 is switched from "off" (OFF) to "on" (ON) for the first time.

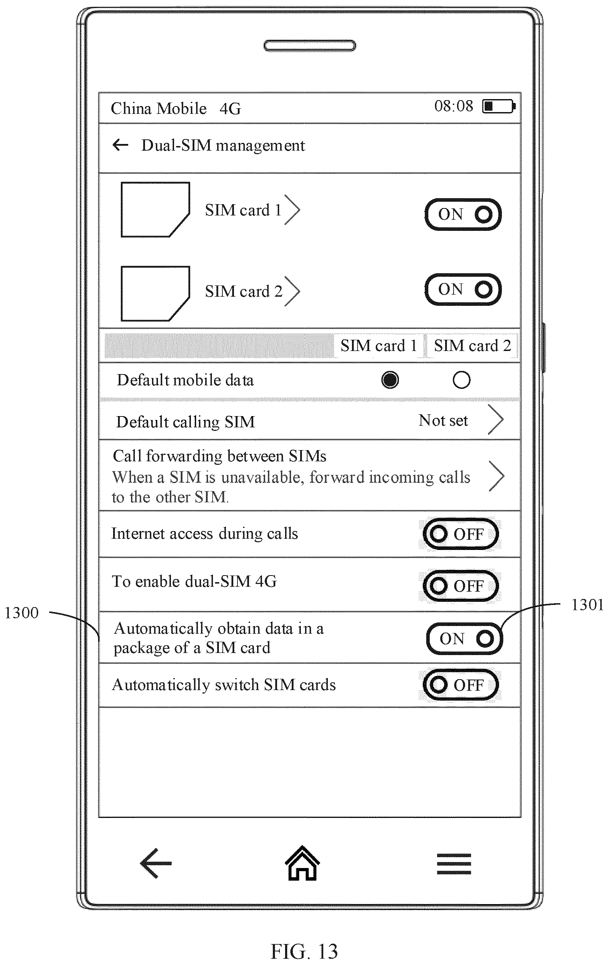

In addition, in some embodiments, an option 1300 for automatically obtaining a package of a SIM card and a virtual button 1301 thereof may be further added to the settings screen of dual-SIM management shown in FIG. 3. The virtual button 1301 is used to enable or disable a function of automatically obtaining a package of a SIM card. For example, when the virtual button 1301 is on (ON), a settings screen of dual-SIM management may be shown in FIG. 13. In this scenario, the mobile phone 200 may further obtain the package information of the SIM card when detecting that a user triggers turning-on of the virtual button 1301.

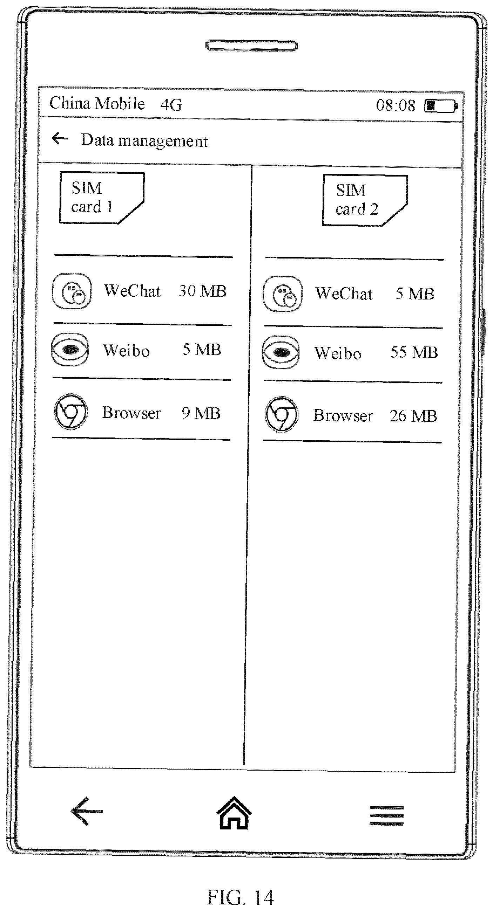

It should be understood that, in this embodiment of this application, statistics collection about data used by applications installed on the mobile phone 200 may be separately performed for a SIM card 1 and a SIM card 2, and the data may be displayed on a settings screen of data management of the mobile phone. For example, Browser, WeChat, and Weibo are installed on the mobile phone 200, and the SIM card 1 and the SIM card 2 are preconfigured in the mobile phone 200. If WeChat corresponds to the SIM card 1, Weibo corresponds to the SIM card 2, and Browser corresponds to the SIM card 2, the settings screen of data management may be, for example, shown in FIG. 14. Mobile data used by WeChat by using the SIM card 1 is 30 MB, and mobile data used by WeChat by using the SIM card 2 is 5 MB. Mobile data used by Weibo by using the SIM card 1 is 5 MB, and mobile data used by Weibo by using the SIM card 2 is 55 MB. Mobile data used by Browser by using the SIM card 1 is 9 MB, and mobile data used by Browser by using the SIM card 2 is 26 MB. In addition, a display form of data used by each application on the settings screen of data management is not limited in this embodiment of this application. For example, when the data used by each application is displayed, sorting may be performed in descending order of the used data, or may be performed in a sequence of application installation.

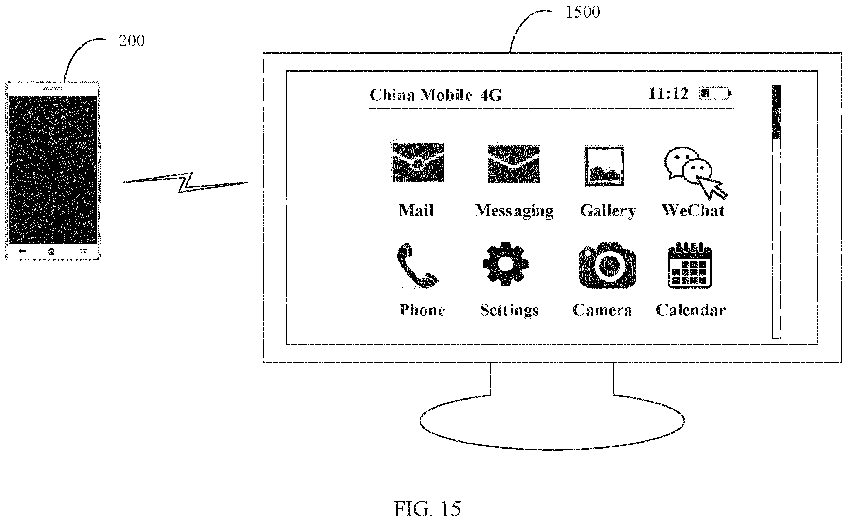

In addition, the foregoing embodiments of this application may be further applied to a scenario in which an electronic device is connected to an external display device. For example, as shown in FIG. 15, the electronic device is the mobile phone 200, and the external display device is an all-in-one machine 1500. The mobile phone 200 may be connected to the all-in-one machine 1500 through Bluetooth or Wi-Fi, so that a screen of the mobile phone 200 is displayed on the all-in-one machine 1500. Then, the user may perform, by using a mouse or a keyboard indicator, an operation on the screen of the mobile phone 200 that is displayed on the all-in-one machine. For example, the user may tap an icon of WeChat to open a screen of WeChat, to display the screen of WeChat on the all-in-one machine 1500. When detecting that the user taps the icon of WeChat on the all-in-one machine 1500, the mobile phone 100 may automatically determine a SIM card corresponding to WeChat, and perform a data service by using the SIM card corresponding to WeChat. For a manner of automatically determining the SIM card corresponding to WeChat, refer to the manner in the foregoing embodiment. Details are not described herein again. For another example, the electronic device is a mobile phone, and the external display device is a vehicle-mounted computer. When the electronic device is connected to the vehicle-mounted computer, an operation may be performed on the mobile phone by using the vehicle-mounted computer. When learning that the user enables, by using the vehicle-mounted computer, a specific application installed on the mobile phone, the mobile phone may automatically determine a correspondence between the application and a SIM card, and perform a data service by using the SIM card corresponding to the application. For a manner of automatically determining the SIM card corresponding to WeChat, refer to the manner in the foregoing embodiment. Details are not described herein again.

(deleted)

In the foregoing embodiments provided in this application, the method provided in the embodiments of this application is described from a perspective of the mobile phone 200 as an execution body. To implement functions in the methods provided in the embodiments of this application, the electronic device may include a hardware structure and/or a software module, and implement the functions in a form of the hardware structure, the software module, or a combination of the hardware structure and the software module. Whether a function in the functions is performed by using the hardware structure, the software module, or the combination of the hardware structure and the software module depends on a specific application and a design constraint condition of the technical solution.

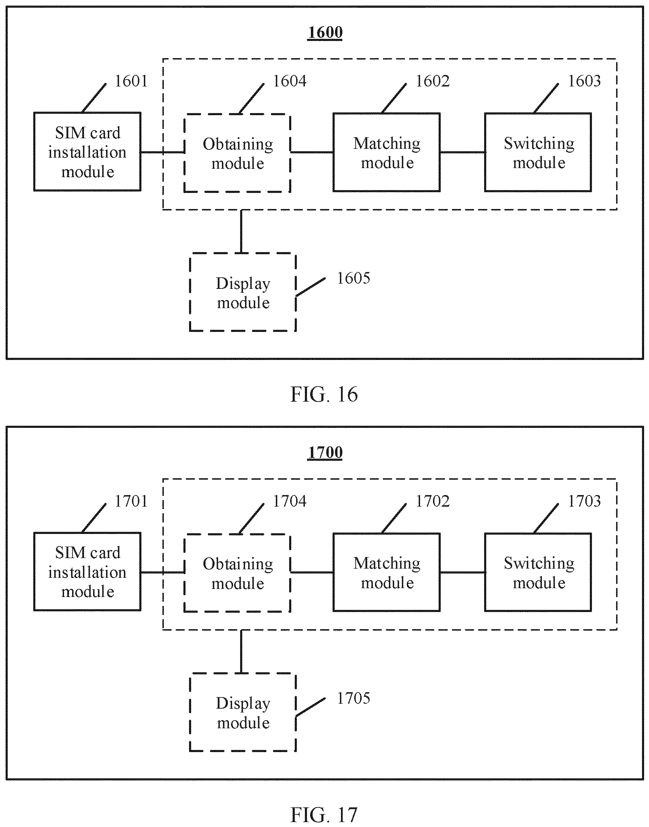

Based on a same concept, FIG. 16 shows an electronic apparatus 1600 according to this application. The electronic apparatus 1600 includes a SIM card installation module 1601, a matching module 1602, and a switching module 1603. The SIM card installation module 1601 is configured to configure a first SIM card and a second SIM card. The matching module 1602 is configured to: when a first application and a second application are installed on the electronic apparatus 1600, automatically determine that a correspondence between an application and a SIM card is that the first application corresponds to the first SIM card and the second application corresponds to the second SIM card. The switching module 1603 is configured to: when a data service is performed by using the first SIM card, if an operation of enabling the second application by a user is detected, switch to the second SIM card to perform a data service. A data service package of the first SIM card is different from a data service package of the second SIM card. The first SIM card is used to perform a data service for the first application, and the second SIM card is used to perform a data service for the second application.

In some embodiments, the SIM card installation module 1601 may be a SIM card installation slot, or may be an eSIM security unit. When the SIM card installation module is the SIM card installation slot, the first SIM card and the second SIM card may be physical SIM cards. When the SIM card installation module 1601 is the eSIM card security unit, the first SIM card and the second SIM card may be virtual SIM cards such as eSIM cards.

In some embodiments, the matching module 1602 is configured to automatically determine, based on a package name of the first application, a package name of the second application, data service package information of the first SIM card, and data service package information of the second SIM card, that the correspondence between an application and a SIM card is that the first application corresponds to the first SIM card and the second application corresponds to the second SIM card. A keyword included in the package name of the first application is the same as a keyword included in the data service package information of the first SIM card, and a keyword included in the package name of the second application is the same as a keyword included in the data service package information of the second SIM card.

In some embodiments, the electronic apparatus 1600 further includes an obtaining module 1604. The obtaining module 1604 is configured to: before the matching module 1602 automatically determines that the correspondence between an application and a SIM card is that the first application corresponds to the first SIM card and the second application corresponds to the second SIM card, obtain the data service package information of the first SIM card from a business and operation support system BOSS of an operator to which the first SIM card belongs, and obtain the data service package information of the second SIM card from a BOSS of an operator to which the second SIM card belongs. Alternatively, in some embodiments, the obtaining module 1604 is configured to: before the matching module 1602 automatically determines that the correspondence between an application and a SIM card is that the first application corresponds to the first SIM card and the second application corresponds to the second SIM card, obtain the data service package information of the first SIM card from an application of an operator to which the first SIM card belongs, and obtain the data service package information of the second SIM card from an application of an operator to which the second SIM card belongs.

In some embodiments, the matching module 1602 is configured to: when it is detected that the first SIM card and/or the second SIM card are/is installed for the first time, automatically determine that the correspondence between an application and a SIM card is that the first application corresponds to the first SIM card and the second application corresponds to the second SIM card. Alternatively, in some embodiments, the matching module 1602 is configured to: when it is detected that a first virtual button on a settings screen of SIM card management is on, automatically determine that the correspondence between an application and a SIM card is that the first application corresponds to the first SIM card and the second application corresponds to the second SIM card. The first virtual button is used to enable or disable a function of automatically matching an application and a SIM card.

In some embodiments, the electronic apparatus 1600 further includes a display module 1605. The display module 1605 is configured to display prompt information on a screen of the second application within preset duration. The prompt information is used to prompt the user that a SIM card used when the electronic apparatus 1600 performs a data service is the second SIM card.

In some embodiments, the matching module 1602 is further configured to: store the correspondence between an application and a SIM card, and write the correspondence between an application and a SIM card into the settings screen of SIM card management, so that the correspondence between an application and a SIM card is displayed on the settings screen of SIM card management.

In some embodiments, the matching module 1602 is further configured to: when it is detected that the first SIM card and/or the second SIM card are/is replaced, update the correspondence between an application and a SIM card. Alternatively, in some embodiments, the matching module 1602 is further configured to: when it is detected that the first SIM card and/or the second SIM card are/is detached, update the correspondence between an application and a SIM card. Alternatively, in some embodiments, the matching module 1602 is further configured to: when it is detected that a new application is installed, update the correspondence between an application and a SIM card. Alternatively, in some embodiments, the matching module 1602 is further configured to: when it is detected that the first application and/or the second application are/is uninstalled, update the correspondence between an application and a SIM card.

In some embodiments, the switching module 1603 is further configured to: when a data service is performed by using the first SIM card and the first application is being run, after the switching module 1603 switches to the second SIM card to perform a data service, disable the first application.

In some embodiments, the switching module 1603 is further configured to: when a data service is performed by using the first SIM card and the first application is being run, after the switching module 1603 switches to the second SIM card to perform a data service, interrupt a data service of the first application, and continue the data service of the first application after switching to the first SIM card to perform a data service.

In some embodiments, the switching module 1603 is further configured to: when a data service is performed by using the first SIM card and the first application is being run, after the switching module 1603 switches to the second SIM card to perform a data service, continue to run the first application in the background.

In some embodiments, the switching module 1603 is further configured to: when a data service is performed by using the first SIM card and the first application is being run, after the switching module 1603 switches to the second SIM card to perform a data service, determine, based on settings of a second virtual button, whether to continue to run the first application in the background. The settings of the second virtual button are used to enable or disable a function of continuing to run the first application in the background when a SIM card used after switching is not the first SIM card.

In some embodiments, the first SIM card is set as a default SIM card, and the default SIM card is a SIM card used by the electronic device by default to perform a data service.

In some embodiments, the switching module 1603 is further configured to: after it is detected that the second application is disabled, switch to the first SIM card to perform the data service. Alternatively, in some embodiments, the switching module 1603 is further configured to: after it is detected that the second application exits the foreground, switch to the first SIM card to perform a data service.

In some embodiments, if a third application is further installed on the electronic apparatus 1600, and the third application corresponds to neither the first SIM card nor the second SIM card, the matching module 1602 is further configured to: if an operation of enabling the third application by the user is detected, perform a data service by using the default SIM card.

It should be noted that, in this embodiment of this application, during specific implementation, corresponding functions of the matching module 1602, the switching module 1603, and the obtaining module 1604 may be separately integrated into three or more different processors, or may be integrated into two processors or one processor. This is not limited. During specific implementation, the display module 1605 may be a touchscreen of the electronic apparatus 1600. In addition, the electronic apparatus 1600 may not perform display on the display module of the electronic apparatus 1600. In this case, the electronic apparatus 1600 may connect to an external display device (for example, an all-in-one machine, a television, a vehicle-mounted computer, a notebook computer, or a desktop computer) to perform display on the external display device.

Based on a same concept, FIG. 17 shows an electronic apparatus 1700 according to an embodiment of this application. The electronic apparatus 1700 includes a SIM card installation module 1701, a matching module 1702, and a switching module 1703. The SIM card installation module 1701 is configured to configure a first SIM card and a second SIM card. The matching module 1702 is configured to: when a first application and a second application are installed on the electronic apparatus, and a data service is performed by using the first SIM card, if an operation of enabling the second application by a user is detected, automatically determine a SIM card corresponding to the second application. The switching module 1703 is configured to: when the SIM card corresponding to the second application is the second SIM card, switch to the second SIM card to perform a data service. A data service package of the first SIM card is different from a data service package of the second SIM card.

In some embodiments, the matching module 1702 is configured to determine, based on a package name of the second application, data service package information of the first SIM card, and data service package information of the second SIM card, the SIM card corresponding to the second application. A keyword included in data service package information of the SIM card corresponding to the second application is the same as a keyword included in the package name of the second application.

In some embodiments, the matching module 1702 is further configured to: after the operation of enabling the second application by the user is detected, and before the SIM card corresponding to the second application is automatically determined, determine that a prestored correspondence between an application and a SIM card does not comprise a correspondence between the second application and a SIM card; and after the SIM card corresponding to the second application is automatically determined, store a correspondence between the second application and the second SIM card.

In some embodiments, the electronic apparatus 1700 further includes an obtaining module 1704. The obtaining module 1704 is configured to: before the matching module 1702 automatically determines the SIM card corresponding to the second application, obtain the data service package information of the first SIM card from a business and operation support system BOSS of an operator to which the first SIM card belongs, and obtain the data service package information of the second SIM card from a BOSS of an operator to which the second SIM card belongs. Alternatively, in some embodiments, the obtaining module 1704 is configured to: before the matching module 1702 automatically determines the SIM card corresponding to the second application, obtain the data service package information of the first SIM card from an application of an operator to which the first SIM card belongs, and obtain the data service package information of the second SIM card from an application of an operator to which the second SIM card belongs.

In some embodiments, the matching module 1702 is configured to: when a first virtual button on a settings screen of SIM card management is on, if it is detected that the second application is enabled, automatically determine the SIM card corresponding to the second application. The first virtual button is used to enable or disable a function of automatically matching an application and a SIM card.

In some embodiments, the electronic apparatus 1700 further includes a display module 1705. The display module 1705 is configured to display prompt information on a screen of the second application within preset duration. The prompt information is used to prompt the user that a SIM card used when the electronic apparatus performs a data service is the second SIM card.

In some embodiments, the matching module 1702 is further configured to: when it is detected that the first SIM card and/or the second SIM card are/is replaced, update the correspondence list between an application and a SIM card. Alternatively, in some embodiments, the matching module 1702 is further configured to: when it is detected that the first SIM card and/or the second SIM card are/is detached, update the correspondence list between an application and a SIM card.

In some embodiments, when a data service is performed by using the first SIM card, the first application is being run, and a SIM card corresponding to the first application is the first SIM card, the switching module 1703 is further configured to: after switching to the second SIM card to perform a data service, disable the first application. Alternatively, in some embodiments, the switching module 1703 is further configured to: after switching to the second SIM card to perform a data service, interrupt a data service of the first application, and continue to run the data service of the first application after switching to the first SIM card to perform a data service. Alternatively, in some embodiments, the switching module 1703 is further configured to: after switching to the second SIM card to perform a data service, continue to run the first application in the background. Alternatively, in some embodiments, the switching module 1703 is further configured to: after switching to the second SIM card to perform a data service, determine, based on settings of a second virtual button on the settings screen of SIM card management, whether to continue to run the first application in the background. The settings of the second virtual button are used to enable or disable a function of continuing to run the first application in the background when a SIM card used after switching is not the first SIM card.

In some embodiments, the first SIM card is a default SIM card, and the default SIM card is a SIM card used by the electronic device by default to perform a data service.

In some embodiments, the switching module 1703 is further configured to: after it is detected that the second application is disabled, switch to the first SIM card to perform a data service. Alternatively, in some embodiments, the switching module 1703 is further configured to: after it is detected that the second application exits the foreground, switch to the first SIM card to perform a data service.

In a possible design, if a third application is further installed on the electronic device, and the third application corresponds to neither the first SIM card nor the second SIM card, the matching module 1702 is further configured to: if an operation of enabling the third application by the user is detected, perform a data service by using the default SIM card.

It should be noted that, in this embodiment of this application, during specific implementation, corresponding functions of the matching module 1702, the switching module 1703, and the obtaining module 1704 may be separately integrated into three or more different processors, or may be integrated into two processors or one processor. This is not limited. During specific implementation, the display module 1704 may be a touchscreen of the electronic apparatus 1700. In addition, the electronic apparatus 1700 may not perform display on the display module of the electronic apparatus 1700. In this case, the electronic apparatus 1600 may connect to an external display device (for example, an all-in-one machine, a television, a vehicle-mounted computer, a notebook computer, or a desktop computer) to perform display on the external display device.

The processor in the embodiments may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory (random access memory, RAM), a flash memory, a read-only memory (read-only memory, ROM), a programmable read-only memory, an electrically erasable programmable memory, a register, or the like. The storage medium is located in the memory, and a processor reads instructions in the memory and completes the steps in the foregoing methods in combination with hardware of the processor.

A person of ordinary skill in the art may be aware that, in combination with the examples described in the embodiments disclosed in this specification, modules and method operations may be implemented by electronic hardware or a combination of computer software and electronic hardware. Whether the functions are performed by hardware or software depends on particular applications and design constraint conditions of the technical solutions. A person skilled in the art may use different methods to implement the described functions for particular applications.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for automatically switching subscriber identity module, SIM, cards, applied to an electronic device, wherein a first application and a second application are installed on the electronic device, and a first SIM card and a second SIM card are preconfigured in the electronic device, wherein the method comprises:
automatically determining, by the electronic device, that a correspondence between an application and a SIM card is that the first application corresponds to the first SIM card and the second application corresponds to the second SIM card, wherein the first SIM card is used to perform a data service for the first application, and the second SIM card is used to perform a data service for the second application; and
when performing a data service by using the first SIM card, if detecting an operation of enabling the second application by a user, switching, by the electronic device, to the second SIM card to perform a data service, wherein a data service package of the first SIM card is different from a data service package of the second SIM card,
wherein the method further comprises:
storing, by the electronic device, the correspondence between an application and a SIM card, and displaying the correspondence between an application and a SIM card on the settings screen of SIM card management,
**characterized in that** the method further comprises:
when detecting that the first SIM card and/or the second SIM card are/is replaced, updating, by the electronic device, the correspondence between an application and a SIM card; or
when detecting that the first SIM card and/or the second SIM card are/is detached, updating, by the electronic device, the correspondence between an application and a SIM card; or
when detecting that a new application is installed, updating, by the electronic device, the correspondence between an application and a SIM card; or when detecting that the first application and/or the second application are/is uninstalled, updating, by the electronic device, the correspondence between an application and a SIM card;
wherein the automatically determining, by the electronic device, that a correspondence between an application and a SIM card is that the first application corresponds to the first SIM card and the second application corresponds to the second SIM card comprises:
when detecting that a first virtual button on a settings screen of SIM card management is on, automatically determining, by the electronic device, that the correspondence between an application and a SIM card is that the first application corresponds to the first SIM card and the second application corresponds to the second SIM card, wherein the first virtual button is used to enable or disable a function of automatically matching an application and a SIM card.

2. The method according to claim 1, wherein the automatically determining, by the electronic device, that a correspondence between an application and a SIM card is that the first application corresponds to the first SIM card and the second application corresponds to the second SIM card comprises:
automatically determining, by the electronic device based on a package name of the first application, a package name of the second application, data service package information of the first SIM card, and data service package information of the second SIM card, that the correspondence between an application and a SIM card is that the first application corresponds to the first SIM card and the second application corresponds to the second SIM card, wherein a keyword comprised in the package name of the first application is the same as a keyword comprised in the data service package information of the first SIM card, and a keyword comprised in the package name of the second application is the same as a keyword comprised in the data service package information of the second SIM card.

3. The method according to claim 1 or 2, wherein before the automatically determining, by the electronic device, that a correspondence between an application and a SIM card is that the first application corresponds to the first SIM card and the second application corresponds to the second SIM card, the method further comprises:
obtaining, by the electronic device, the data service package information of the first SIM card from a business and operation support system, BOSS, of an operator to which the first SIM card belongs, and obtaining the data service package information of the second SIM card from a BOSS of an operator to which the second SIM card belongs; or
obtaining, by the electronic device, the data service package information of the first SIM card from an application of an operator to which the first SIM card belongs, and obtaining the data service package information of the second SIM card from an application of an operator to which the second SIM card belongs.

4. The method according to any one of claims 1 to 3, wherein the method further comprises:
displaying, by the electronic device, prompt information on a screen of the second application within preset duration, wherein the prompt information is used to prompt the user that a SIM card used when the electronic device performs a data service is the second SIM card.

5. The method according to any one of claims 1 to 4, wherein when the electronic device performs a data service by using the first SIM card and the first application is being run, after the electronic device switches to the second SIM card to perform a data service, the method further comprises:
disabling, by the electronic device, the first application; or
interrupting, by the electronic device, a data service of the first application, and continuing the data service of the first application after switching to the first SIM card to perform a data service; or
continuing, by the electronic device, to run the first application in the background; or
determining, by the electronic device based on settings of a second virtual button, whether to continue to run the first application in the background, wherein the second virtual button are used to enable or disable a function of continuing to run the first application in the background when a SIM card used after switching is not the first SIM card.

6. The method according to any one of claims 1 to 5, wherein the first SIM card is set as a default SIM card, and the default SIM card is a SIM card used by the electronic device by default to perform a data service.

7. The method according to claim 6, wherein the method further comprises:
after detecting that the second application is disabled, switching, by the electronic device, to the first SIM card to perform a data service; or
after detecting that the second application exits the foreground, switching, by the electronic device, to the first SIM card to perform a data service.

8. The method according to claim 6 or 7, wherein if a third application is further installed on the electronic device, and the third application corresponds to neither the first SIM card nor the second SIM card, the method further comprises:
if detecting an operation of enabling the third application by the user, performing, by the electronic device, a data service by using the default SIM card.

9. An electronic apparatus, comprising a touchscreen, one or more processors, a memory, a plurality of application programs, and one or more computer programs, wherein
the one or more computer programs are stored in the memory, the one or more computer programs comprise an instruction, and when the instruction is executed by the one or more processors, the method according to any one of claims 1 to 8 is implemented.

10. A computer storage medium storing a program, wherein, when the program is run on an electronic device, the electronic device is enabled to perform the method according to any one of claims 1 to 8.

11. A computer program product, wherein, when the computer program product is run on an electronic device, the electronic device is enabled to perform the method according to any one of claims 1 to 8.

## Patentansprüche

1. Verfahren zum automatischen Wechseln von Teilnehmeridentitätsmodulkarten, SIM-Karten, das auf eine elektronische Vorrichtung angewendet wird, wobei eine erste Anwendung und eine zweite Anwendung auf der elektronischen Vorrichtung installiert sind und eine erste SIM-Karte und eine zweite SIM-Karte in der elektronischen Vorrichtung vorkonfiguriert sind, wobei das Verfahren Folgendes umfasst: automatisches Bestimmen, durch die elektronische Vorrichtung, dass eine Entsprechung zwischen einer Anwendung und einer SIM-Karte darin besteht, dass die erste Anwendung der ersten SIM-Karte entspricht und die zweite Anwendung der zweiten SIM-Karte entspricht, wobei die erste SIM-Karte verwendet wird, um einen Datendienst für die erste Anwendung durchzuführen, und die zweite SIM-Karte verwendet wird, um einen Datendienst für die zweite Anwendung durchzuführen; und
bei Durchführen eines Datendienstes unter Verwendung der ersten SIM-Karte, wenn ein Vorgang zum Aktivieren der zweiten Anwendung durch einen Benutzer detektiert wird, Wechseln, durch die elektronische Vorrichtung, auf die zweite SIM-Karte zum Durchführen eines Datendienstes, wobei sich ein Datendienstpaket der ersten SIM-Karte von einem Datendienstpaket der zweiten SIM-Karte unterscheidet,
wobei das Verfahren ferner Folgendes umfasst:
Speichern, durch die elektronische Vorrichtung, der Entsprechung zwischen einer Anwendung und einer SIM-Karte und Anzeigen der Entsprechung zwischen einer Anwendung und einer SIM-Karte auf dem Einstellungsbildschirm der SIM-Kartenverwaltung,
**dadurch gekennzeichnet, dass** das Verfahren ferner Folgendes umfasst:
bei Detektieren, dass die erste SIM-Karte und/oder die zweite SIM-Karte ausgetauscht werden/wird, Aktualisieren, durch die elektronische Vorrichtung, der Entsprechung zwischen einer Anwendung und einer SIM-Karte; oder
bei Detektieren, dass die erste SIM-Karte und/oder die zweite SIM-Karte getrennt werden/wird, Aktualisieren, durch die elektronische Vorrichtung, der Entsprechung zwischen einer Anwendung und einer SIM-Karte; oder
bei Detektieren, dass eine neue Anwendung installiert ist, Aktualisieren, durch die elektronische Vorrichtung, der Entsprechung zwischen einer Anwendung und einer SIM-Karte; oder bei Detektieren, dass die erste Anwendung und/oder die zweite Anwendung deinstalliert sind/ist, Aktualisieren, durch die elektronische Vorrichtung, der Entsprechung zwischen einer Anwendung und einer SIM-Karte;
wobei das automatische Bestimmen, durch die elektronische Vorrichtung, dass eine Entsprechung zwischen einer Anwendung und einer SIM-Karte darin besteht, dass die erste Anwendung der ersten SIM-Karte entspricht und die zweite Anwendung der zweiten SIM-Karte entspricht, Folgendes umfasst:
bei Detektieren, dass eine erste virtuelle Schaltfläche auf einem Einstellungsbildschirm der SIM-Kartenverwaltung angeschaltet ist, automatisches Bestimmen, durch die elektronische Vorrichtung, dass die Entsprechung zwischen einer Anwendung und einer SIM-Karte darin besteht, dass die erste Anwendung der ersten SIM-Karte entspricht und die zweite Anwendung der zweiten SIM-Karte entspricht, wobei die erste virtuelle Schaltfläche verwendet wird, um eine Funktion zum automatischen Zuordnen einer Anwendung zu einer SIM-Karte zu aktivieren oder zu deaktivieren.

2. Verfahren nach Anspruch 1, wobei das automatische Bestimmen, durch die elektronische Vorrichtung, dass eine Entsprechung zwischen einer Anwendung und einer SIM-Karte darin besteht, dass die erste Anwendung der ersten SIM-Karte entspricht und die zweite Anwendung der zweiten SIM-Karte entspricht, Folgendes umfasst:
automatisches Bestimmen, durch die elektronische Vorrichtung basierend auf einem Paketnamen der ersten Anwendung, einem Paketnamen der zweiten Anwendung, Datendienstpaketinformationen der ersten SIM-Karte und Datendienstpaketinformationen der zweiten SIM-Karte, dass die Entsprechung zwischen einer Anwendung und einer SIM-Karte darin besteht, dass die erste Anwendung der ersten SIM-Karte entspricht und die zweite Anwendung der zweiten SIM-Karte entspricht, wobei ein Schlüsselwort, das in dem Paketnamen der ersten Anwendung umfasst ist, dasselbe ist wie ein Schlüsselwort, das in den Datendienstpaketinformationen der ersten SIM-Karte umfasst ist, und ein Schlüsselwort, das in dem Paketnamen der zweiten Anwendung umfasst ist, dasselbe ist wie ein Schlüsselwort, das in den Datendienstpaketinformationen der zweiten SIM-Karte umfasst ist.

3. Verfahren nach Anspruch 1 oder 2, wobei, vor dem automatischen Bestimmen, durch die elektronische Vorrichtung, dass eine Entsprechung zwischen einer Anwendung und einer SIM-Karte darin besteht, dass die erste Anwendung der ersten SIM-Karte entspricht und die zweite Anwendung der zweiten SIM-Karte entspricht, das Verfahren ferner Folgendes umfasst:
Erlangen, durch die elektronische Vorrichtung, der Datendienstpaketinformationen der ersten SIM-Karte von einem Geschäfts- und Betriebsunterstützungssystem, BOSS, eines Betreibers, zu dem die erste SIM-Karte gehört, und Erlangen der Datendienstpaketinformationen der zweiten SIM-Karte von einem BOSS eines Betreibers, zu dem die zweite SIM-Karte gehört; oder Erlangen, durch die elektronische Vorrichtung, der Datendienstpaketinformationen der ersten SIM-Karte von einer Anwendung eines Betreibers, zu dem die erste SIM-Karte gehört, und Erlangen der Datendienstpaketinformationen der zweiten SIM-Karte von einer Anwendung eines Betreibers, zu dem die zweite SIM-Karte gehört.

4. Verfahren nach einem der Ansprüche 1 bis 3, wobei das Verfahren ferner Folgendes umfasst:
Anzeigen, durch die elektronische Vorrichtung, von Meldungsinformationen auf einem Bildschirm der zweiten Anwendung innerhalb einer voreingestellten Dauer, wobei die Meldungsinformationen verwendet werden, um dem Benutzer zu melden, dass eine SIM-Karte, die verwendet wird, wenn die elektronische Vorrichtung einen Datendienst durchführt, die zweite SIM-Karte ist.

5. Verfahren nach einem der Ansprüche 1 bis 4, wobei, wenn die elektronische Vorrichtung einen Datendienst unter Verwendung der ersten SIM-Karte durchführt und die erste Anwendung ausgeführt wird, nachdem die elektronische Vorrichtung zum Durchführen eines Datendienstes auf die zweite SIM-Karte umgeschaltet hat, das Verfahren ferner Folgendes umfasst:
Deaktivieren, durch die elektronische Vorrichtung, der ersten Anwendung; oder
Unterbrechen, durch die elektronische Vorrichtung, eines Datendienstes der ersten Anwendung und Fortsetzen des Datendienstes der ersten Anwendung nach Wechseln auf die erste SIM-Karte zum Durchführen eines Datendienstes; oder
Weiterführen, durch die elektronische Vorrichtung, der ersten Anwendung im Hintergrund; oder
Bestimmen, durch die elektronische Vorrichtung basierend auf Einstellungen einer zweiten virtuellen Schaltfläche, ob die erste Anwendung im Hintergrund weitergeführt werden soll, wobei die zweite virtuelle Schaltfläche verwendet wird, um eine Funktion zum Weiterführen der ersten Anwendung im Hintergrund zu aktivieren oder zu deaktivieren, wenn eine nach dem Wechseln verwendete SIM-Karte nicht die erste SIM-Karte ist.

6. Verfahren nach einem der Ansprüche 1 bis 5, wobei die erste SIM-Karte als eine Standard-SIM-Karte eingestellt ist und die Standard-SIM-Karte eine SIM-Karte ist, die von der elektronischen Vorrichtung standardmäßig zum Durchführen eines Datendienstes verwendet wird.

7. Verfahren nach Anspruch 6, wobei das Verfahren ferner Folgendes umfasst:
nach Detektieren, dass die zweite Anwendung deaktiviert ist, Wechseln, durch die elektronische Vorrichtung, auf die erste SIM-Karte, um einen Datendienst durchzuführen; oder
nach Detektieren, dass die zweite Anwendung im Vordergrund besteht, Wechseln, durch die elektronische Vorrichtung, auf die erste SIM-Karte, um einen Datendienst durchzuführen.

8. Verfahren nach Anspruch 6 oder 7, wobei, wenn eine dritte Anwendung ferner auf der elektronischen Vorrichtung installiert ist und die dritte Anwendung weder der ersten SIM-Karte noch der zweiten SIM-Karte entspricht, das Verfahren ferner Folgendes umfasst:
wenn ein Vorgang zum Aktivieren der dritten Anwendung durch den Benutzer detektiert wird, Durchführen, durch die elektronische Vorrichtung, eines Datendienstes unter Verwendung der Standard-SIM-Karte.

9. Elektronisches Gerät, umfassend einen Touchscreen, einen oder mehrere Prozessoren, einen Speicher, eine Vielzahl von Anwendungsprogrammen und ein oder mehrere Computerprogramme, wobei
das eine oder die mehreren Computerprogramme in dem Speicher gespeichert sind, das eine oder die mehreren Computerprogramme eine Anweisung umfassen und, wenn die Anweisung durch den einen oder die mehreren Prozessoren ausgeführt wird, das Verfahren nach einem der Ansprüche 1 bis 8 umgesetzt wird.

10. Computerspeichermedium, das ein Programm speichert, wobei, wenn das Programm auf einer elektronischen Vorrichtung ausgeführt wird, die elektronische Vorrichtung in die Lage versetzt wird, das Verfahren nach einem der Ansprüche 1 bis 8 durchzuführen.

11. Computerprogrammprodukt, wobei, wenn das Computerprogrammprodukt auf einer elektronischen Vorrichtung ausgeführt wird, die elektronische Vorrichtung in die Lage versetzt wird, das Verfahren nach einem der Ansprüche 1 bis 8 durchzuführen.

## Revendications

1. Procédé de commutation automatique de cartes de module d'identité d'abonné, SIM, appliqué à un dispositif électronique, dans lequel une première application et une deuxième application sont installées sur le dispositif électronique, et une première carte SIM et une seconde carte SIM sont préconfigurées dans le dispositif électronique, dans lequel le procédé comprend :
la détermination, de façon automatique, par le dispositif électronique, qu'une correspondance entre une application et une carte SIM est que la première application correspond à la première carte SIM et la deuxième application correspond à la seconde carte SIM, dans lequel la première carte SIM est utilisée pour exécuter un service de données pour la première application, et la seconde carte SIM est utilisée pour exécuter un service de données pour la deuxième application ; et
lors de l'exécution d'un service de données à l'aide de la première carte SIM, si une opération d'activation de la deuxième application par un utilisateur est détectée, la commutation, par le dispositif électronique, vers la seconde carte SIM pour exécuter un service de données, dans lequel un package de services de données de la première carte SIM est différent d'un package de services de données de la seconde carte SIM,
dans lequel le procédé comprend en outre :
le stockage, par le dispositif électronique, de la correspondance entre une application et une carte SIM, et l'affichage de la correspondance entre une application et une carte SIM sur l'écran de paramétrage de gestion de la carte SIM, **caractérisé en ce que** le procédé comprend en outre :
lors de la détection du remplacement de la première carte SIM et/ou de la seconde carte SIM, la mise à jour, par le dispositif électronique, de la correspondance entre une application et une carte SIM ; ou
lors de la détection du détachement de la première carte SIM et/ou de la seconde carte SIM, la mise à jour, par le dispositif électronique, de la correspondance entre une application et une carte SIM ; ou
lors de la détection de l'installation d'une nouvelle application, la mise à jour, par le dispositif électronique, de la correspondance entre une application et une carte SIM ; ou lors de la détection de la désinstallation de la première application et/ou de la deuxième application, la mise à jour, par le dispositif électronique, de la correspondance entre une application et une carte SIM ;
dans lequel la détermination, de façon automatique, par le dispositif électronique, qu'une correspondance entre une application et une carte SIM est que la première application correspond à la première carte SIM et la deuxième application correspond à la seconde carte SIM comprend :
lors de la détection qu'un premier bouton virtuel sur un écran de paramètres de gestion de carte SIM est activé, la détermination de façon automatique, par le dispositif électronique, que la correspondance entre une application et une carte SIM est que la première application correspond à la première carte SIM et la deuxième application correspond à la seconde carte SIM, dans lequel le premier bouton virtuel est utilisé pour activer ou désactiver une fonction de mise en correspondance automatique d'une application et d'une carte SIM.

2. Procédé selon la revendication 1, dans lequel la détermination, de façon automatique, par le dispositif électronique, qu'une correspondance entre une application et une carte SIM est que la première application correspond à la première carte SIM et la deuxième application correspond à la seconde carte SIM, comprend :
la détermination, de façon automatique, par le dispositif électronique sur la base d'un nom de package de la première application, d'un nom de package de la deuxième application, des informations de package de services de données de la première carte SIM et des informations de package de services de données de la seconde carte SIM, que la correspondance entre une application et une carte SIM est que la première application correspond à la première carte SIM et la deuxième application correspond à la seconde carte SIM, dans lequel un mot clé compris dans le nom de package de la première application est le même qu'un mot clé compris dans les informations de package de services de données de la première carte SIM, et un mot-clé compris dans le nom de package de la deuxième application est identique à un mot-clé compris dans les informations de package de services de données de la seconde carte SIM.

3. Procédé selon la revendication 1 ou 2, dans lequel avant la détermination, de façon automatique, par le dispositif électronique, qu'une correspondance entre une application et une carte SIM est que la première application correspond à la première carte SIM et la deuxième application correspond à la seconde carte SIM, le procédé comprend en outre :
l'obtention par le dispositif électronique, des informations de package de services de données de la première carte SIM auprès d'un système de support commercial et opérationnel, BOSS, d'un opérateur auquel appartient la première carte SIM, et l'obtention des informations de package de services de données de la seconde carte SIM auprès d'un BOSS d'un opérateur auquel appartient la seconde carte SIM ; ou
l'obtention par le dispositif électronique, des informations de package de services de données de la première carte SIM auprès d'une application d'un opérateur auquel appartient la première carte SIM, et l'obtention des informations de package de services de données de la seconde carte SIM auprès d'une application d'un opérateur auquel appartient la seconde carte SIM.

4. Procédé selon l'une quelconque des revendications 1 à 3, dans lequel le procédé comprend en outre :
l'affichage, par le dispositif électronique, d'informations d'invite sur un écran de la deuxième application pendant une durée prédéfinie, dans lequel les informations d'invite sont utilisées pour indiquer à l'utilisateur qu'une carte SIM utilisée lorsque le dispositif électronique exécute un service de données est la seconde carte SIM.

5. Procédé selon l'une quelconque des revendications 1 à 4, dans lequel lorsque le dispositif électronique exécute un service de données à l'aide de la première carte SIM et que la première application est en cours d'exécution, après que le dispositif électronique commute vers la seconde carte SIM pour exécuter un service de données, le procédé comprend en outre :
la désactivation, par le dispositif électronique, de la première application ; ou
l'interruption, par le dispositif électronique, d'un service de données de la première application, et la poursuite du service de données de la première application après la commutation vers la première carte SIM pour exécuter un service de données ; ou la poursuite, par le dispositif électronique, de l'exécution de la première application en arrière-plan ; ou
le fait de déterminer, par le dispositif électronique, sur la base des paramètres d'un second bouton virtuel, s'il faut continuer ou non à exécuter la première application en arrière-plan, dans lequel le second bouton virtuel est utilisé pour activer ou désactiver une fonction permettant de poursuivre l'exécution de la première application en arrière-plan lorsqu'une carte SIM utilisée après la commutation n'est pas la première carte SIM.

6. Procédé selon l'une quelconque des revendications 1 à 5, dans lequel la première carte SIM est définie comme carte SIM par défaut, et la carte SIM par défaut est une carte SIM utilisée par défaut par le dispositif électronique pour exécuter un service de données.

7. Procédé selon la revendication 6, dans lequel le procédé comprend en outre :
après le fait de détecter que la deuxième application est désactivée, la commutation, par le dispositif électronique, vers la première carte SIM pour exécuter un service de données ; ou après le fait de détecter que la deuxième application quitte l'arrière-plan, la commutation, par le dispositif électronique, vers la première carte SIM pour exécuter un service de données.

8. Procédé selon la revendication 6 ou 7, dans lequel si une troisième application est en outre installée sur le dispositif électronique, et que la troisième application ne correspond ni à la première carte SIM ni à la seconde carte SIM, le procédé comprend en outre :
en cas de détection d'une opération d'activation de la troisième application par l'utilisateur, l'exécution, par le dispositif électronique, d'un service de données à l'aide de la carte SIM par défaut.

9. Appareil électronique, comprenant un écran tactile, un ou plusieurs processeurs, une mémoire, une pluralité de programmes d'application et un ou plusieurs programmes informatiques, dans lequel
les un ou plusieurs programmes informatiques sont stockés dans la mémoire, les un ou plusieurs programmes informatiques comprennent une instruction et lorsque les un ou plusieurs programmes informatiques exécutent l'instruction, le procédé est mis en oeuvre selon l'une quelconque des revendications 1 à 8.

10. Support de stockage informatique, dans lequel lorsque le programme est exécuté sur un dispositif électronique, le dispositif électronique est capable de mettre en oeuvre le procédé selon l'une quelconque des revendications 1 à 8.

11. Produit de programme informatique, dans lequel lorsque le produit de programme informatique est exécuté sur un dispositif électronique, le dispositif électronique est activé pour mettre en oeuvre le procédé selon l'une quelconque des revendications 1 à 8.
